# EUROPEAN PATENT APPLICATION

(11) **EP 4 184 099 A1**
(43) Date of publication of application: **24.05.2023**
(21) Application number: 22207550.9
(22) Date of filing: 15.11.2022
(51) Int. Cl.: F25D 25/02

(54) **METHOD FOR MANUFACTURING REFRIGERATION APPLIANCE AND REFRIGERATION APPLIANCE**

(30) Priority: 17.11.2021 CN 202111359550
(71) Applicant: BSH Hausgeräte GmbH, 81739 München (DE)
(72) Inventor: Bai, Yufa, Chuzhou, Anhui, 239016 (CN); Niu, Huaifeng, Chuzhou, 239016 (CN); Yu, Jian, Chuzhou, 239016 (CN)

(57) **Abstract**

A refrigeration appliance and method for manufacturing same. The refrigeration appliance includes a housing, an inner liner located inside the housing, a thermal insulating layer located between the housing and the inner liner, a bracket, and a bracket fixer. At least one refrigeration compartment is formed in the inner liner. At least one storage container is disposed in the refrigeration compartment. The bracket is disposed in the refrigeration compartment. Guide rails being mounted on the bracket. The storage container is connected to the guide rail and able to be pulled out of or pushed back into the refrigeration compartment along the guide rail. The bracket fixer is combined with the thermal insulating layer. The bracket includes a first fixed portion detachably fixed to the bracket fixer and a second fixed portion matched with a bottom wall of the refrigeration compartment to limit the bracket.

## Description

### TECHNICAL FIELD

Embodiments of the present invention relate to the technical field of refrigeration appliances and particularly relate to a refrigeration appliance and a method for manufacturing the refrigeration appliance.

### BACKGROUND

Refrigeration appliances are one of the household appliances that are essential to people's daily lives. Existing refrigeration appliances usually have multiple drawers in the refrigeration compartment to increase the space utilization rate of the refrigeration compartment as much as possible and also to facilitate the user's storage on a partitioned basis as required.

In order to install the drawers, guide rails need to be mounted in the inner liner of the refrigeration compartment. In the existing technology, guide rail brackets are usually fixed by screws, and this way for fixing is complicated in operation, which both affects the assembling efficiency and makes disassembling difficult. In addition, as the use time of the refrigeration appliance increases, the screws are prone to rusting in the refrigeration compartment, and the rusted screws have a weakened load-bearing capacity and may even break when the guide rail is overloaded. Therefore, the mounting structure of the guide rails used in the existing technology has many defects such as complex assembling, difficult disassembling and a weak load-bearing capacity.

### SUMMARY

An object of embodiments of the present invention is to provide an improved refrigeration appliance.

Thus, an embodiment of the present invention provides a refrigeration appliance, including an a housing, an inner liner located inside the housing and a thermal insulating layer located between the housing and the inner liner, at least one refrigeration compartment being formed in the inner liner, and at least one storage container being disposed in the refrigeration compartment; the refrigeration appliance further includes a bracket disposed in the refrigeration compartment, guide rails being mounted on the bracket, and the storage container being connected to the guide rail and able to be pulled out of or pushed back into the refrigeration compartment along the guide rail; and a bracket fixer, combined with the thermal insulating layer, part of the bracket fixer passing through a mounting hole formed in a bottom wall of the refrigeration compartment to be located in the refrigeration compartment; where, the bracket includes a first fixed portion and a second fixed portion, the first fixed portion being detachably fixed to the bracket fixer, and the second fixed portion being matched with a bottom wall of the refrigeration compartment to limit the bracket.

By adopting this implementation solution, the bracket can be detachably fixed to the bracket fixer conveniently and positioning of the bracket in the refrigeration compartment is more accurate, and the bracket fixer is high in structural strength and can bear large loads.

Specifically, the bracket fixer is partially covered with the thermal insulating layer so that the bracket fixer and the bracket fixed thereto can be firmly combined with the inner liner. The bracket fixer and the inner liner are bonded together by the thermal insulating layer, and the inner liner can share the acting force applied to the bracket fixer by the bracket and the storage container supported thereon, so that the supporting effect of the bracket fixer provided in this implementation solution is better. Further, the mounting hole is formed in the inner liner by punching to facilitate guaranteeing relative positions of the bracket fixed to the portion of the bracket fixer passing through the mounting hole and the inner liner. Further, the bracket is detachably fixed to the bracket fixer, so that repeated disassembling and assembling of the bracket is achieved. Further, the bracket also ensures that positioning between the bracket and the inner liner is accurate by cooperation between the second fixed portion and the bottom wall of the refrigeration compartment, and further ensures that a relative position between a storage container supported on the bracket and the inner liner is accurate.

Optionally, the second fixed portion is used for restricting movement of the bracket relative to the refrigeration compartment in at least one horizontal direction. Thus, positioning of the bracket and the inner liner in a front-back and/or left-right direction is guaranteed.

Optionally, the bracket further includes a second fixed portion, a limiting structure is formed at the bottom wall of the refrigeration compartment, the second fixed portion and the limiting structure are matched to restrict movement of the bracket relative to the refrigeration compartment in a depth direction of the refrigeration compartment. Thus, the second fixed portion is matched with the limiting structure disposed at the bottom wall of the refrigeration compartment to precisely position the bracket and the inner liner in the front-rear direction (namely, the y direction), particularly before foaming.

Optionally, the bottom wall of the refrigeration compartment has a positioning groove recessed towards the thermal insulating layer, and the second fixed portion extends into the positioning groove. For example, the second fixed portion includes positioning ribs, and front-rear positioning of the bracket and the inner liner can be achieved by cooperation with the positioning groove.

Optionally, both ends of the positioning rib abut against both ends of the positioning groove in the depth direction of the refrigeration compartment, respectively. Thus, front-rear positioning of the bracket and the inner liner can be effectively achieved.

Optionally, in the depth direction of the refrigeration compartment, the second fixed portion is located at a front end of the bracket and the positioning groove is located in front of the mounting hole. By disposing the positioning groove at a shallow position of the refrigeration compartment, assembling is more facilitated, and it is easy to confirm positions of the second fixed portion and the positioning groove during mounting, so that the second fixed portion can be quickly inserted into the positioning groove during mounting.

Optionally, the second fixed portion is a cross rib, and the positioning groove is a rectangular blind hole. In addition to restricting movement of the bracket in the front-rear direction, the cross-shaped positioning rib can also play a restricting role in the left-right direction.

Optionally, the bracket fixer has an accommodating cavity recessed towards the thermal insulating layer, and a part of the bracket extends into the accommodating cavity to be detachably fixed to the accommodating cavity. Therefore, when the bracket is fixed to the accommodating cavity, reliable fixing and positioning in the refrigeration compartment is achieved by the part of the accommodating cavity recessed into the thermal insulating layer. Further, the accommodating cavity separates the bracket from the thermal insulating layer so that the bracket can be conveniently detached from the bracket fixer. On the other hand, a part of the bracket extends into the accommodating cavity, which can reduce a space of the refrigeration compartment occupied by the portion of the bracket for being fixed to the bracket fixer, so that the effective utilization rate of the refrigeration compartment can be improved easily, and thus a storage container with a larger volume can be obtained for storage.

Optionally, the bracket fixer includes a first supporting portion combined with the thermal insulating layer, and a second supporting portion passing through the mounting hole to be located in the refrigeration compartment, the accommodating cavity is defined by a bottom wall, the front wall, the rear wall and a pair of side walls, the bottom wall and a part of the side walls, the front wall and the rear wall of the accommodating cavity form the first supporting portion, and a remaining part of the side walls, the front wall and the rear wall of the accommodating cavity form the second supporting portion. Thus, the first supporting portion is covered with the thermal insulating layer, and bonded together with the inner liner by the thermal insulating layer so as to reliably support the bracket. The second supporting portion is used for detachably fixing the bracket and physically isolates the bracket from the thermal insulating layer. Further, the first supporting portion and the second supporting portion are an integrated piece, so that the bracket fixer is higher in structural strength and not prone to rupture and damage caused by the external force.

Optionally, in the height direction of the refrigeration compartment, a bottom of the positioning groove and a bottom of the first supporting portion are basically flush. Thus, bottoms of the portion of the bracket extending into the accommodating cavity and the portion located outside the accommodating cavity and extending into the positioning groove are flush, so that a bottom surface of the bracket is flat and force borne when supporting the storage container can be evenly distributed to the bracket fixer and the inner liner.

Optionally, the first supporting portion includes a skirt extending outwards from the accommodating cavity, the side of the skirt facing the bracket abutting against the bottom wall of the refrigeration compartment, and the side of the skirt facing away from the bracket being combined with the thermal insulating layer. Thus, the skirt can ensure that the bracket fixer is firmly fixed to the inner liner and can also isolate the thermal insulating layer to avoid bubble leakage.

Optionally, in the height direction of the refrigeration compartment, a joint of the skirt and the accommodating cavity is approximately located in a middle of the side wall of the accommodating cavity. Thus, the height of the accommodating cavity remaining outside the inner liner and the height of the accommodating cavity extending into the refrigeration compartment are basically equal, so that it is avoided that the portion of the bracket extending into the accommodating cavity is so small, consequently affecting the reliability of combination of the bracket and the accommodating cavity, and it is also avoided that the portion of the accommodating cavity extending into the refrigeration compartment is so large, causing damage by an external force in daily use.

Optionally, the skirt forms a closed loop around the accommodating cavity to effectively avoid bubble leakage.

Optionally, the skirt is in line contact with the bottom wall of the refrigeration compartment at least when the thermal insulating layer is not filled. In view of the possible uneven wall thickness phenomenon in the forming process of the inner liner, the skirt may be of a flexible construction and the skirt is at least in line contact with the bottom wall of the refrigeration compartment when the bracket fixer is assembled to the inner liner before foaming. During foaming, whether the wall thickness of the inner liner in a region covered by the skirt is small or large, the design of the flexible structure can provide a sufficient pressure to make the skirt and the inner liner attached closely, avoiding bubble leakage during foaming.

Optionally, the skirt may be compressed to deform by the thermal insulating layer. Thus, the skirt can be closely attached with the inner liner, for example in surface-to-surface contact, which is advantageous to prevent leakage of foaming liquid from the mounting hole.

Optionally, the skirt extends outwards from the accommodating cavity and extends in the direction of the bracket. Thus, an edge of the skirt can be brought into line contact with the bottom wall of the refrigeration compartment when the bracket fixer is mounted to the inner liner before foaming. For example, the skirt is an arc surface curved towards the bracket to further provide expansion space for the foaming liquid so that the skirt can be compressed by the thermal insulating layer to be closely attached to the inner liner.

Optionally, there is a spacing between a root portion of the skirt and the mounting hole in the height direction of the refrigeration compartment, and a tail end of the skirt abuts against the bottom wall of the refrigeration compartment. Thus, a gap between the skirt and the bottom wall of the refrigeration compartment can provide a deformation space for the skirt to be compressed to be deformed by the thermal insulating layer during foaming. Further, the gap can also achieve sealing cushioning, even if a small amount of the foaming liquid enters the gap between the skirt and the inner liner during foaming, excess foaming liquid may accumulate in the gap without overflowing from the mounting hole into the refrigeration compartment.

Optionally, a gap exists between the second supporting portion and the mounting hole on a plane perpendicular to the height direction of the refrigeration compartment. Thus, the dimension of a main body of the bracket fixer except the skirt is smaller than that of a punched hole of the inner liner, so as to reduce the influence of a change of a wall thickness of the inner liner on cooperation between the bracket and the bracket fixer, and eliminate the negative influence of a punching error on mounting of the bracket. Further, in a scenario where tolerance control of the mounting hole formed by punching in the inner liner is good, there may be no significant gap.

Optionally, the bracket includes a longitudinal supporting portion, the first fixed portion includes a protrusion portion protruding outwards from the longitudinal supporting portion, and the accommodating cavity is provided with a first adapting portion, where, the protrusion portion is located below the first adapting portion in the height direction of the refrigeration compartment. Thus, the first adapting portion forms a fixed hook position, and is matched with the protrusion portion to achieve fastening of the bracket and the bracket fixer. Further, the first adapting portion may be provided with reinforcing ribs to improve strength so that the bracket fixer can bear large loads.

Optionally, the protrusion portion and the first adapting portion at least partially overlap in the height direction of the refrigeration compartment. When the storage container is supported on the guide rail and is pulled out of or pushed back into the refrigeration compartment in the depth direction of the refrigeration compartment, it is easy to cause that the bracket is unevenly stressed and upwraps at the end portion. In this implementation solution, the protrusion portion is disposed below the first adapting portion and at least partially overlaps the first adapting portion, so that the first adapting portion can hook the protrusion portion to firmly fix the bracket in place, and the end portion of the bracket is prevented from upwarping as the storage container is pulled out.

Optionally, in the depth direction of the refrigeration compartment, the protrusion portion is located at a rear end of the bracket, and the first adapting portion is located on a rear wall of the accommodating cavity. The first adapting portion is larger in structural strength and not prone to deformation, and disposed at the rear end, which can better prevent the rear end of the bracket from upwarping when the storage container is pulled forwards. Specifically, when the storage container is supported on the guide rail and is pulled out of the refrigeration compartment in the depth direction of the refrigeration compartment, it is easy to cause that the rear end of the bracket upwarps. In the present embodiment, the protrusion portion is disposed below the first adapting portion at the rear end and at least partially overlaps the first adapting portion, so that the first adapting portion can hook the protrusion portion to firmly fix the bracket in place, and the rear end of the bracket is prevented from upwarping as the storage container is pulled out.

Optionally, in the height direction of the refrigeration compartment, a front wall of the accommodating cavity includes, from top to bottom, a straight line segment and a first arc segment connected to each other, the first adapting portion includes a second arc segment protruding towards the front wall of the accommodating cavity, where, the circle center of the first arc segment and the circle center of the second arc segment coincide. During assembling, the protrusion portion at the rear end of the bracket hooks the first adapting portion of the bracket fixer, and then the bracket is rotated downwards with the circle center of the second arc segment as a rotation fulcrum. As the bracket rotates, the front end of the bracket sequentially extends into the accommodating cavity along the straight line segment and the first arc segment until mounting in place is achieved. Therefore, fixing between the bracket and the bracket fixer and positioning between the bracket and the inner liner are achieved through special design of the bracket and the bracket fixer on a matching surface in a manner of rotating downwards with an engaged position center as a circle center. Further, a bottom shape of vertical reinforcing ribs of the bracket may be adapted to a shape of the front wall of the accommodating cavity so as to ensure that the bracket can be mounted in place by taking the rear end as an axis to rotate downwards, where, the vertical reinforcing ribs are reinforcing ribs extending in the depth direction of the refrigeration compartment.

Optionally, the first fixed portion includes a hook portion, the accommodating cavity is provided with a second adapting portion, and the hook portion is suitable for being coupled to or decoupled from the second adapting portion. Thus, the hook portion is coupled to the second adapting portion, which can further ensure reliable combination of the bracket and the accommodating cavity. Further, the hook portion may be decoupled from the second adapting portion so that the bracket can be disassembled from the interior of the accommodating cavity.

Optionally, the first fixed portion includes a plurality of hook portions disposed at intervals along an edge of the longitudinal supporting portion, and a plurality of second adapting portions are correspondingly disposed on the side wall of the accommodating cavity at intervals. Thus, reliable combination of the bracket and the accommodating cavity can be further ensured.

Optionally, the hook portion is disposed on a side surface of the longitudinal supporting portion in the width direction of the refrigeration compartment, and the second adapting portion is disposed on the side wall of the accommodating cavity. Thus, reliable combination of the bracket and the accommodating cavity can be further ensured.

Optionally, the bottom wall of the refrigeration compartment has a boss protruding towards the bracket, the mounting hole being formed in the boss, and the bracket being supported on the boss and at least covering two sides of the boss in the width direction of the refrigeration compartment. Thus, left-right positioning of the bracket and the inner liner can be achieved. Specifically, the inner liner is punched and a circle of protrusions around the inner liner form a positioning surface, and the bracket covers the positioning surface at least on the left and right to achieve left-right positioning. When the bracket is assembled to the bracket fixer, the boss on the inner liner is clamped between the bracket and the bracket fixer, so that positioning is achieved through the shape of the boss.

Optionally, the bracket has a supporting surface extending in fit with a shape of the boss, the supporting surface being suitable for forming the second fixed portion. Thus, the second fixed portion formed by the supporting surface and the positioning surface formed by the boss are in zero-clearance fit to realize left-right positioning of the bracket and the inner liner.

Optionally, the boss is provided with the positioning groove for being matched with the second fixed portion, the positioning groove and the mounting hole being disposed side by side in the depth direction of the refrigeration compartment. Thus, the positioning groove and the second fixed portion formed by the positioning rib are matched to realize front-rear positioning of the bracket and the inner liner, and the boss and the second fixed portion formed by the supporting surface are matched to realize left-right positioning of the bracket and the inner liner.

Optionally, the front end of the bracket covers a front end of the boss in the depth direction of the refrigeration compartment. Thus, front-rear positioning of the bracket and the inner liner can be achieved while improving the attractiveness of a front side of the refrigeration compartment.

Optionally, the bracket includes the longitudinal supporting portion and two extended supporting portions respectively extending outwards from two sides of the longitudinal supporting portion, the side of the extended supporting portions facing the boss being in surface-to-surface contact or line-to-surface contact with the boss. Thus, the extended supporting portions serve as side wings of the bracket to be supported on both sides of the longitudinal supporting portion, and the side wing is not provided with a reinforcing rib, but the whole surface of the side wing is attached to the boss of the inner liner, which can also realize left-right positioning of the bracket and the inner liner.

Optionally, an edge of the extended supporting portion abuts against a portion of the bottom wall of the refrigeration compartment surrounding the boss. Thus, positioning of the bracket and the inner liner in the left-right direction and/or the front-rear direction can be achieved.

Optionally, a side of the bracket facing the boss is provided with a plurality of reinforcing ribs, a shape of a tail end of the reinforcing rib fits the shape of the boss. The boss and the reinforcing rib on the bracket are positioned with zero-clearance fit, and since both formation of the boss and the reinforcing rib on the bracket is guaranteed with a mold so that positioning of the bracket and the inner liner is more accurate. Furthermore, the mold can be modified as required to adjust the matching effect between the reinforcing rib and the boss, and since mold modification is highly adjustable and easy to operate, accurate positioning of the bracket and the inner liner can be achieved more quickly and accurately.

Optionally, in the depth direction or width direction of the refrigeration compartment, the reinforcing ribs span the boss and abut against the portion of the bottom wall of the refrigeration compartment surrounding the exterior of the boss. Thus, a positioning role is played and force can also be dispersed to improve structural strength.

Optionally, the plurality of reinforcing ribs includes first part of reinforcing ribs extending in the depth direction of the refrigeration compartment and second part of reinforcing ribs extending in the width direction of the refrigeration compartment, where, the first part of reinforcing ribs are located in front of the mounting hole and the second part of reinforcing ribs are distributed over the boss. Thus, the first part of reinforcing ribs may play a supporting and front-rear positioning role, and the second part of reinforcing ribs may play a supporting and left-right positioning role.

Optionally, the bracket includes the longitudinal supporting portion and two extended supporting portions respectively extending outwards from two sides of the longitudinal supporting portion, the longitudinal supporting portion and the two extended supporting portions are an integrated piece. Thus, it is possible to provide a bracket having high stability and high structural strength. The two extended supporting portions on the left and right play a supporting and fixing role in the longitudinal supporting portion, so that the overall stability of the bracket is high and the structural strength is high. Further, the design of the integrated piece can effectively solve the problem that due to an assembly error of the bracket, the guide rails connected to both sides of the longitudinal supporting portion cannot be aligned, and greatly reduce a height difference between two storage containers connected to the guide rails on both sides respectively. Further, the design of the integrated piece also facilitates a reduction in member number.

Optionally, the extended supporting portion and the storage container at least partially overlap in the height direction of the refrigeration compartment. For example, the extended supporting portion and the storage container located on the same side surface of the bracket at least partially overlap in the height direction of the refrigeration compartment. Thus, it is possible to use of the space of the refrigeration compartment to the maximum extent, so that the storage container can be made as wide as possible to increase the storage space.

Optionally, the longitudinal supporting portion has a first supporting surface, the extended supporting portion has a second supporting surface, and the first supporting surface and/or the second supporting surface extend/extends rearward and downwards in the depth direction of the refrigeration compartment. Thus, each of three main supporting surfaces of the bracket can be designed to be high in front and low in rear, the main supporting surface being used for being matched with a foaming mold during foaming so as to restrict the expansion amplitude of a foamed layer in the height direction of the refrigeration compartment.

Optionally, the number of the at least one storage container is two, the guide rails include a first guide rail suitable for supporting one of the two storage containers and a second guide rail suitable for supporting the other one of the two storage containers, the longitudinal supporting portion includes a first mounting portion for mounting the first guide rail and a second mounting portion for mounting the second guide rail, and the first mounting portion and the second mounting portion are not collinear in the width direction of the refrigeration compartment. Thus, the integrally formed longitudinal supporting portion makes the two storage containers connected to the bracket less prone to a height difference, which is advantageous for improving the attractiveness of the storage container placed in the refrigeration compartment. Further, the staggered design of the mounting portions for mounting the guide rails on both sides of the bracket can greatly reduce the width of the bracket in the width direction of the refrigeration compartment, compared with an existing implementation solution in which mounting portions of two drawers on the left and right must be disposed side by side in the width direction of the refrigeration compartment. Thereby it is advantageous to increase the available volume for storage in the refrigeration compartment, e.g. the volume of the two storage containers disposed side by side in the refrigeration compartment may be increased.

Optionally, in the height direction of the refrigeration compartment, the first mounting portion and the second mounting portion are basically flush. Thus, the first mounting portion and the second mounting portion are maintained at the same height in the height direction of the refrigeration compartment, so that the two storage containers within the refrigeration compartment are maintained flush in supporting height. Further, both the first mounting portion and the second mounting portion are disposed on the same member, namely, the bracket, and are formed on the same mold during manufacturing so that positional deviation between the first mounting portion and the second mounting portion can be minimized without introducing an assembly error, so that alignment accuracy between the two storage containers supported on both sides of the bracket can be ensured easily. When the main supporting surface of the bracket is designed to be high in front and low in rear, it is more convenient for a slider of the foaming mold to support the main supporting surface of the bracket during the foaming process of a box body.

Optionally, for any mounting portion of the first mounting portion and the second mounting portion, the mounting portion includes a screw hole, a first section located between the screw hole and a top end of the bracket, and a second section located between the screw hole and a bottom end of the bracket, where, the first section and the second section are formed by using different core-pulling mechanisms. Thus, it is possible to form the mounting portion on the integrated bracket by separately forming a part of the mounting portion by different core-pulling mechanisms. Further, the first mounting portion and the second mounting portion are concentrated onto one member and injection-molded at a time, and relative positions of the first mounting portion and the second mounting portion are secured by an injection mold so that alignment with higher accuracy is achieved to eliminate the height difference of the guide rails on both sides as much as possible.

Optionally, the first section includes two blind holes formed at an interval in the depth direction of the refrigeration compartment, and edges of sides of the two blind holes close to the screw hole are both same-radius arcs taking the screw hole as a circle center. Thus, the screw hole in the mounting portion obtained by mold drawing has a uniform wall thickness in one circle. Further, the blind hole is designed so that the top end of the bracket does not collapse while the mounting portion is formed by mold drawing.

Optionally, the two blind holes are separated by a vertical rib, the vertical rib passing through the circle center of the screw hole. Further, a boundary of the first section and the second section passes through the circle center of the screw hole. Thus, the screw hole is located at the center of the mounting hole, so that the force of the guide rail and the storage container supported on the guide rail borne by the screw hole can be uniformly dispersed onto the mounting hole, thereby improving the structural strength of the member.

Optionally, the first mounting portion is shielded by the first guide rail and the second mounting portion is shielded by the second guide rail. Thus, by adapting to the guide rail, the hole formed by core pulling in the mounting portion is shielded by the guide rail so as to be invisible to the outside, which is more attractive.

Accordingly, embodiments of the present invention also provide a method for manufacturing a refrigeration appliance as described above, including: enabling the bracket fixer to pass through the mounting hole from a portion outside the bottom wall of the refrigeration compartment to be located in the refrigeration compartment; fixing the bracket to the bracket fixer, where, the first fixed portion is coupled to the bracket fixer, and the second fixed portion is matched with the bottom wall of the refrigeration compartment; and filling a thermal insulating material between the inner liner and the housing to form the thermal insulating layer, the thermal insulating layer being suitable to be combined with the portion of the bracket fixer located outside the bottom wall of the refrigeration compartment to fix the bracket fixer.

With this implementation solution, precise positioning between the bracket and the inner liner can be achieved both before and after foaming. Before foaming, the bracket and the inner liner are accurately positioned by the first fixed portion and the second fixed portion, and the bracket fixer is fixed to the inner liner. After foaming, the bracket fixer plays a supporting, force bearing and positioning role.

Optionally, the enabling the bracket fixer to pass through the mounting hole from a portion outside the bottom wall of the refrigeration compartment to be located in the refrigeration compartment includes: enabling the bracket fixer to pass through the mounting hole from a portion outside the bottom wall of the refrigeration compartment from bottom to top in the height direction of the refrigeration compartment until the skirt of the bracket fixer abuts against the bottom wall of the refrigeration compartment from below. Thus, the bottom wall of the refrigeration compartment is sandwiched between the bracket and the skirt to reliably fix the bracket fixer and the bracket connected thereon to the inner liner before foaming.

### BRIEF DESCRIPTION OF THE DRAWINGS

FIG. 1 is a schematic view of a refrigeration appliance according to an embodiment of the present invention;
FIG. 2 is a partial schematic view of a bracket mounting region in FIG. 1;
FIG. 3 is an exploded view of the bracket mounting region as shown in FIG. 2;
FIG. 4 is a cross-sectional view of the bracket mounting region as shown in FIG. 2 in an A-A direction;
FIG. 5 is a partially enlarged view of a region B in FIG. 4;
FIG. 6 is a bottom view of a bracket in FIG. 3;
FIG. 7 is a cross-sectional view of the bracket mounting region as shown in FIG. 2 in a C-C direction;
FIG. 8 is an exploded view of a cross-sectional structure as shown in FIG. 7;
FIG. 9 is a schematic view of combination of an inner liner and a bracket fixer as shown in FIG. 3;
FIG. 10 is a cross-sectional view of the bracket mounting region as shown in FIG. 2 in a D-D direction;
FIG. 11 is a partially enlarged view of a region E in FIG. 10;
FIG. 12 is a side view of a bracket in FIG. 3;
FIG. 13 is a partially enlarged view of a region F in FIG. 12;
FIGS. 14 to 16 are schematic views of an assembling process of each member in FIG. 3;
FIG. 17 is a schematic view of another bracket according to an embodiment of the present invention;
FIG. 18 is a schematic view of combination of a bracket and guide rails as shown in FIG. 16;
FIG. 19 is a flowchart of a method for manufacturing a refrigeration appliance according to an embodiment of the present invention;

In the drawings: 1-refrigeration appliance 10-housing 11-inner liner 12-thermal insulating layer 13-refrigeration compartment 13a-bottom wall of the refrigeration compartment 13b-side wall of the refrigeration compartment 131-storage container 132-mounting hole 133-limiting structure 134-positioning groove 135-boss 2-bracket 2a-front end of the bracket 2b-rear end of the bracket 21-guide rail

211-first guide rail 212-second guide rail 22-first fixed portion 221-protrusion portion 222-hook portion 23-second fixed portion 24-longitudinal supporting portion 241-first mounting portion 242-second mounting portion 243-screw hole 244-first section 245-second section 246-blind hole 247-vertical rib 25-extended supporting portion 251-edge of extended supporting portion 26-supporting surface 261-first supporting surface 262-second supporting surface 27-reinforcing rib 27a-tail end of the reinforcing rib 271-first part of reinforcing rib 272-second part of reinforcing rib 3-bracket fixer 31-accommodating cavity 31a-bottom wall of the accommodating cavity 31b-front wall of the accommodating cavity 31c-rear wall of the accommodating cavity 31d-side wall of the accommodating cavity 311-first adapting portion 312-straight line segment 313-first arc segment 314-second arc segment 315-second adapting portion 316-clamping portion 32-first supporting portion 321-skirt 33-second supporting portion x-width direction of the refrigeration compartment y-depth direction of the refrigeration compartment z-height direction of the refrigeration compartment O-circle center G-acting force direction

### DETAILED DESCRIPTION

To make the foregoing objectives, characteristics, and advantages of the present invention clearer and easier to understand, specific embodiments of the present invention are described below in detail with reference to the accompanying drawings.

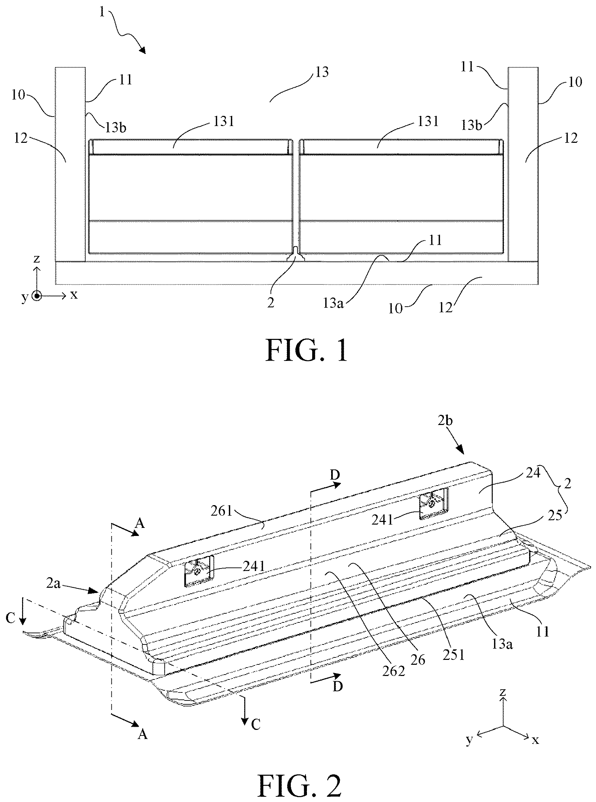

FIG. 1 is a schematic view of a refrigeration appliance according to an embodiment of the present invention. FIG. 1 emphatically shows a specific structure of positions of a bracket and two storage containers inside a refrigeration compartment of the refrigeration appliance.

Specifically, referring to FIG. 1, a refrigeration appliance 1 may include a housing 10, an inner liner 11 located inside the housing 10 and a thermal insulating layer 12 located between the housing 10 and inner liner 11, at least one refrigeration compartment 13 being formed in inner liner 11. The housing 10 may have an opening, the refrigeration appliance 1 further includes a door (not shown in FIG. 1) capable of opening or closing the opening, and the refrigeration compartment 13 is exposed at the opening. The inner liner 11 is suitable for forming a bottom wall 13a, a pair of side walls 13b and a rear wall (not shown in FIG. 1) of the refrigeration compartment 13, and further the inner liner 11 is further suitable for forming a top wall (not shown in FIG. 1) of the refrigeration compartment 13.

The refrigeration appliance 1 may include a refrigerator, a refrigeration cabinet, a freezing cabinet, etc. FIG. 1 exemplifies that the refrigeration appliance 1 includes one refrigeration compartment 13, and in practical applications, the refrigeration appliance 1 may include a plurality of refrigeration compartments 13, where any refrigeration compartment 13 may employ the specific structure described in this implementation solution. For example, the refrigeration compartment 13 may include a refrigeration compartment, a freezing compartment, and a variable-temperature compartment.

For convenience of explanation, in the present embodiment, a width direction of the refrigeration compartment 13 is denoted as an x direction, a depth direction of the refrigeration compartment 13 is denoted as a y direction, and a height direction of the refrigeration compartment13 is denoted as a z direction. The width direction of the refrigeration compartment 13 may be parallel to a width direction of the refrigeration appliance 1, the depth direction of the refrigeration compartment 13 may be parallel to a depth direction of the refrigeration appliance 1, and the height direction of the refrigeration compartment 13 may be parallel to a height direction of the refrigeration appliance 1.

Further, at least one storage container 131 may be disposed in the refrigeration compartment 13. Taking the refrigeration compartment 13 shown in FIG. 1 as an example, two storage containers 131 may be disposed side by side in the x direction in the refrigeration compartment 13. For example, the storage container 131 may be a drawer.

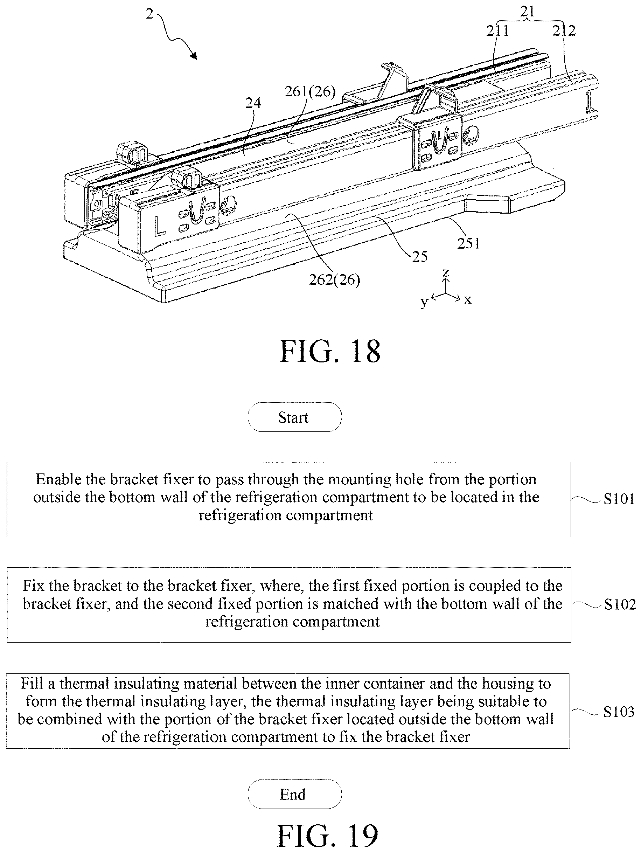

Further, the refrigeration appliance 1 may also include: a bracket 2 disposed in the refrigeration compartment 13, and the two storage containers 131 are separated by the bracket 2. Guide rails 21 (as shown in FIG. 18) may be mounted on side surfaces of the bracket 2 in the x direction, and the two storage containers 131 are respectively connected to the guide rails 21 on the side surfaces of the adjacent bracket 2, and able to be pulled out of or pushed back into the refrigeration compartment 13 along the guide rail 21.

Further, members opposite to the bracket 2 in the x direction may be provided with compartment guide rails (not shown in FIG. 1), and the storage container 131 located between the bracket 2 and the member may be connected to the guide rail 21 and the compartment guide rail and may be pulled out of or pushed back into the refrigeration compartment 13 along the guide rail 21 and the compartment guide rail. Thus, the oppositely disposed guide rails 21 and the compartment guide rails collectively support the storage container 131 located therebetween.

For example, the refrigeration compartment 13 may have two storage containers 131 placed side by side in the x direction, in this scenario, the number of the bracket 2 is one and the two storage containers 131 are separated by the bracket 2, and the member opposite to the bracket 2 may be the side wall 13b of the refrigeration compartment 13. At this time, the storage container 131 is supported on the compartment guide rail disposed on the side wall 13b and the guide rail 21 connected to the bracket 2.

As another example, the refrigeration compartment 13 may have three or even more storage containers 131 placed side by side in the x direction, in this scenario, the number of the bracket 2 may be multiple and adjacent storage containers 131 are separated by the bracket 2, and a member opposite to a certain one of the brackets 2 may be the other bracket 2 or the side wall 13b of the refrigeration compartment 13. At this time, both sides of the storage container 131 may be the bracket 2, or both sides of the storage container 131 may be the bracket 2 and the side wall 13b of the refrigeration compartment 11, respectively.

Next, a specific mounting structure of the bracket 2 in the refrigeration compartment 13 will be described in detail in combination of FIG. 1 to FIG. 4.

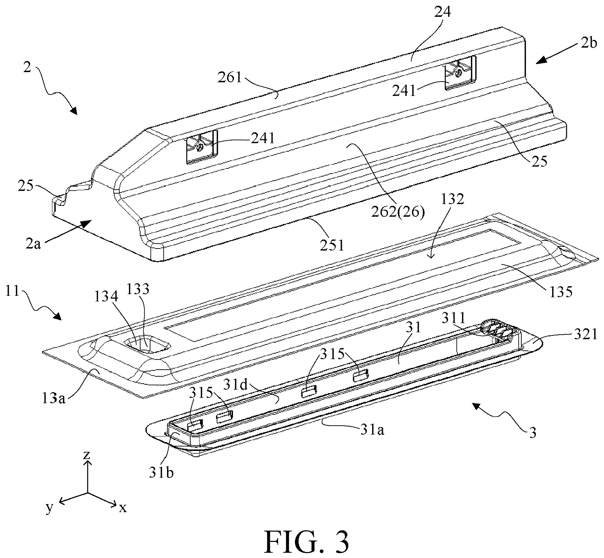

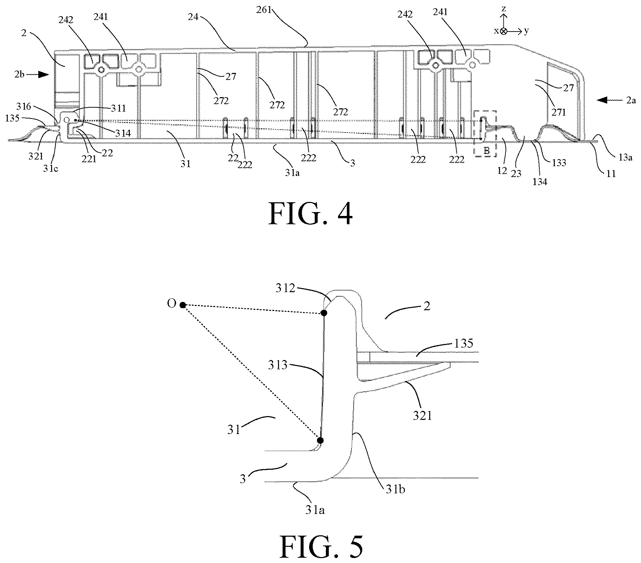

FIG. 2 is a partial schematic view of a bracket mounting region in FIG. 1, FIG. 3 is an exploded view of the bracket mounting region as shown in FIG. 2, and FIG. 4 is a cross-sectional view of the bracket mounting region as shown in FIG. 2 in an A-A direction.

In one specific implementation, in combination with FIGS. 2 to 4, the refrigeration appliance 1 may further include a bracket fixer 3, the bracket fixer 3 being combined with the thermal insulating layer 12, and part of the bracket fixer 3 passing through a mounting hole 132 formed in the bottom wall 13a of the refrigeration compartment 13 to be located in the refrigeration compartment 13. The bracket 2 may include a first fixed portion 22, the first fixed portion 22 being detachably fixed to the bracket fixer 3.

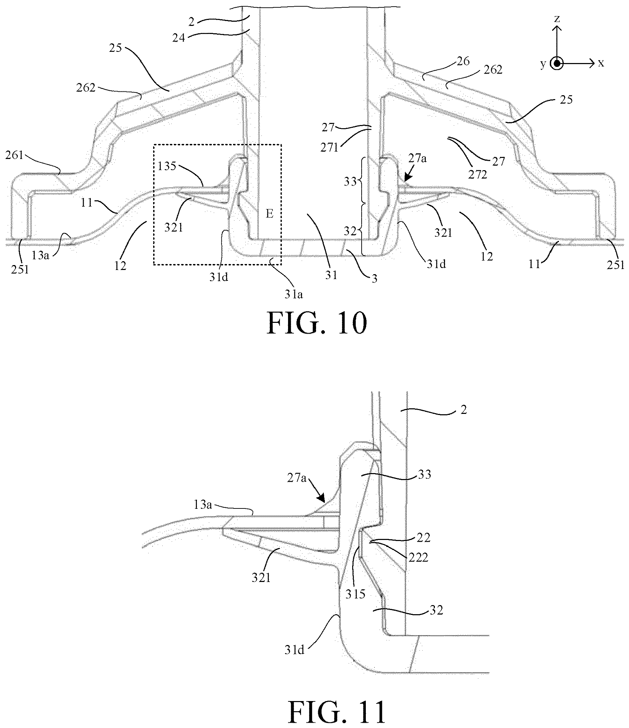

In combination with FIGS. 3, 4 and 10, the bracket fixer 3 may have an accommodating cavity 31 recessed towards the thermal insulating layer 12, and a part of the bracket 2 extends into the accommodating cavity 31 to be detachably fixed to the accommodating cavity 31. FIG. 10 is a cross-sectional view of the bracket mounting region as shown in FIG. 2 in a D-D direction. Thus, when the bracket 2 is fixed to the accommodating cavity 31, reliable fixing and positioning in the refrigeration compartment 13 is achieved by the portion of the accommodating cavity 31 recessed into the thermal insulating layer 12. Further, the accommodating cavity 31 separates the bracket 2 from the thermal insulating layer 12 so that the bracket 2 can be conveniently detached from the bracket fixer 3. On the other hand, a part of the bracket 2 extends into the accommodating cavity 31, which can reduce a space of the refrigeration compartment 13 occupied by the portion of the bracket 2 for being fixed to the bracket fixer 3, so that the effective utilization rate of the refrigeration compartment 13 can be improved easily, and thus a storage container 131 with a larger volume can be obtained for storage.

Specifically, the bracket fixer 3 may include a first supporting portion 32 combined with the thermal insulating layer 12, and a second supporting portion 33 passing through the mounting hole 132 to be located in the refrigeration compartment 13.

For example, the accommodating cavity 31 may be defined by a bottom wall 31a, a front wall 31b, a rear wall 31c and a pair of side walls 31d, where, the bottom wall 31a and a part of the side walls 31d, the front wall 31b and the rear wall 31c of the accommodating cavity 31 form the first supporting portion 32, and a remaining part of the side walls 31d, the front wall 31b and the rear wall 31c of the accommodating cavity 31 form the second supporting portion 33. That is, referring to FIG. 10, the accommodating cavity 31 may be divided into upper and lower portions in the z direction, where, the lower portion is located between the inner liner 11 and the housing 10 and the side facing away from the accommodating cavity 31 is combined with the thermal insulating layer 12, the upper portion extends upward into the refrigeration compartment 13 from the mounting hole 132 in the thermal insulating layer 12 so as to form the second supporting portion 33, and the bracket 2 extends into the accommodating cavity 31 and is detachably connected to the second supporting portion 33 through the first fixed portion 22.

Thus, the first supporting portion 32 is covered with the thermal insulating layer, and bonded together with the inner liner 11 by the thermal insulating layer 12 so as to reliably support the bracket 2. The second supporting portion 33 is used for detachably fixing the bracket 2 and physically isolates the bracket 2 from the thermal insulating layer 12 so as to facilitate maintenance and replacement of the bracket 2 after foaming of the refrigeration appliance 1.

Further, the first supporting portion 32 and the second supporting portion are 33 an integrated piece, so that the bracket fixer 3 is higher in structural strength and not prone to rupture and damage caused by the external force.

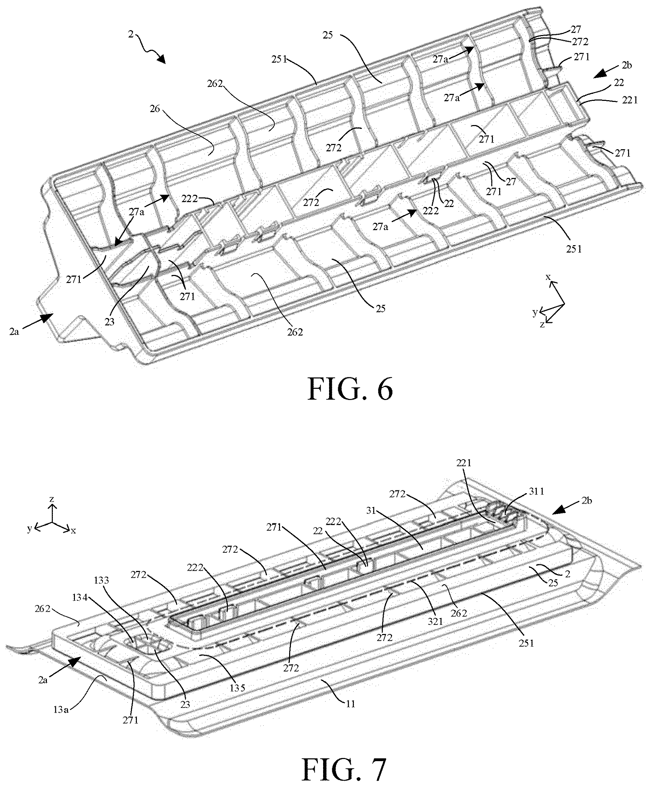

In one specific implementation, referring to FIGS. 3, 4, 6, and 7, the bracket 2 may include a longitudinal supporting portion 24 extending in the z direction and the y direction, the first fixed portion 22 may include a protrusion portion 221 protruding outward from the longitudinal supporting portion 24, and the accommodating cavity 31 may be provided with a first adapting portion 311, where, the protrusion portion 221 is located below the first adapting portion 311 in the z direction. FIG. 6 is a bottom view of a bracket in FIG. 3, and FIG. 7 is a cross-sectional view of the bracket mounting region as shown in FIG. 2 in a C-C direction.

Specifically, at a rear end 2b of the bracket 2, the protrusion portion 221 may protrude from the longitudinal supporting portion 24 in a direction opposite to the y direction. Accordingly, the first adapting portion 311 may be located at the rear wall 31c of the accommodating cavity 31 and protrude in the y direction. When the bracket 2 is connected to the bracket fixer 3, the protrusion portion 221 is located below the first adapting portion 311 and at least partially overlap the first adapting portion 311 in the z direction, as shown in FIG. 4.

In this specific implementation, the first adapting portion 311 is larger in structural strength and not prone to deformation, and disposed at the rear end, which can better prevent the rear end 2b of the bracket 2 from upwarping when the storage container 131 is pulled forwards. Specifically, when the storage container 131 is supported on the guide rail 21 and pulled out of the refrigeration compartment 13 in the y direction, it is easy to cause that the bracket 2 is unevenly stressed and upwraps at the end portion (such as the rear end 2b). In this implementation solution, the protrusion portion 221 is disposed below the first adapting portion 311 at the rear end 2b and at least partially overlaps the first adapting portion 311, so that the first adapting portion 311 can hook the protrusion portion 221 to firmly fix the bracket 2 in place, and the rear end 2b of the bracket 2 is prevented from upwarping as the storage container 131 is pulled out.

Thus, the first adapting portion 311 forms a fixed engaged position, and is matched with the protrusion portion 221 to achieve fastening of the bracket 2 and the bracket fixer 3. Further, referring to FIG. 3, the first adapting portion 311 may be provided with a plurality of reinforcing ribs in the x direction to improve strength so that the bracket fixer 3 can bear large loads.

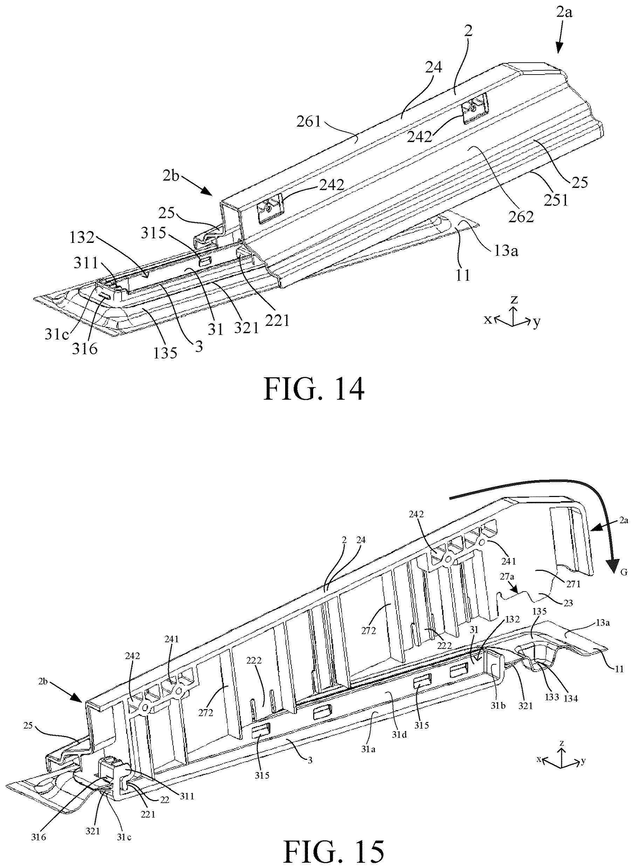

Further, in combination with FIGS. 4 and 14 to 16, the rear wall 31c of the accommodating cavity 31 may be provided with a clamping portion 316 to limit the rear wall 31c of the accommodating cavity 31 in the z direction. FIGS. 14 to FIG. 16 are schematic views of an assembling process of each member in FIG. 3.

For example, the clamping portion 316 may protrude outwards from the rear wall 31c of the accommodating cavity 31 and be disposed at an interval from a skirt 321 which is also located at the rear wall 31c in the z direction, so that the clamping portion 316, the skirt 321 and the rear wall 31c jointly form a U-shaped structure having an opening in a direction facing away from the accommodating cavity 31. The bottom wall 13a of the refrigeration compartment 13 extends from the opening into the U-shaped structure and is sandwiched between the clamping portion 316 and the skirt 321, thereby in the z direction, fixing the rear end of the bracket fixer 3 in the y direction.

Further, in combination with FIGS. 4 and 5, the front wall 31b of the accommodating cavity 31 includes, from top to bottom in the z direction, a straight line segment 312 and a first arc segment 313 connected to each other, and the first adapting portion 311 may include a second arc segment 314 protruding towards the front wall 31b of the accommodating cavity 31. FIG. 5 is a partially enlarged view of a region B in FIG. 4. Further, the circle center of the first arc segment 313 and the circle center of the second arc segment 314 coincide, both denoted as a symbol O in FIGS. 4 and 5.

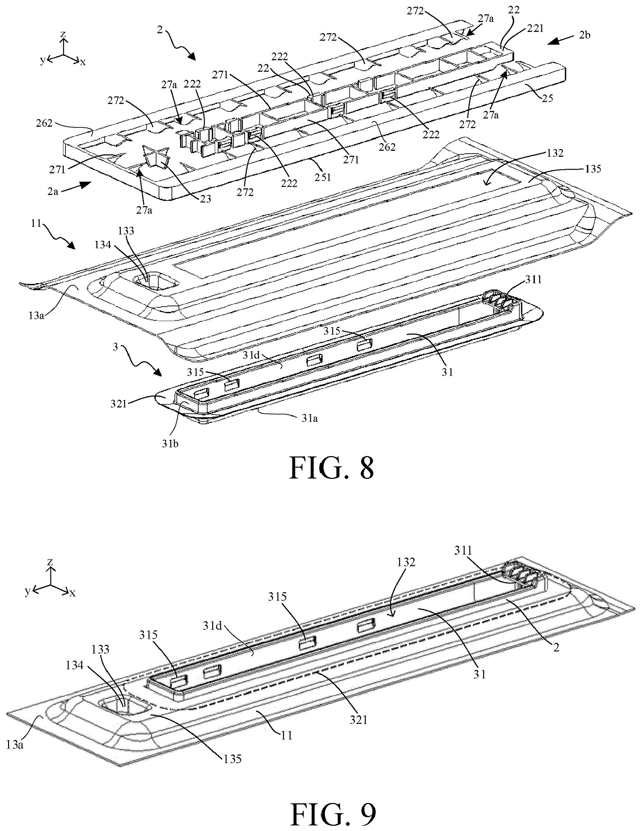

In a typical application scenario, during assembling, the bracket fixer 3 of three members shown in FIG. 3 is first mounted in the z direction from bottom to top to the inner liner 11 and the second supporting portion 33 passes through the mounting hole 132 from bottom to top and then extends into the refrigeration compartment 13 to form an assembly as shown in FIG. 9. FIG. 9 is a schematic view of combination of an inner liner and a bracket fixer as shown in FIG. 3. At this time, the clamping portion 316 is matched with the bottom wall 13a of the refrigeration compartment 13 to restrict relative movement between the bracket fixer 3 and the inner liner 11.

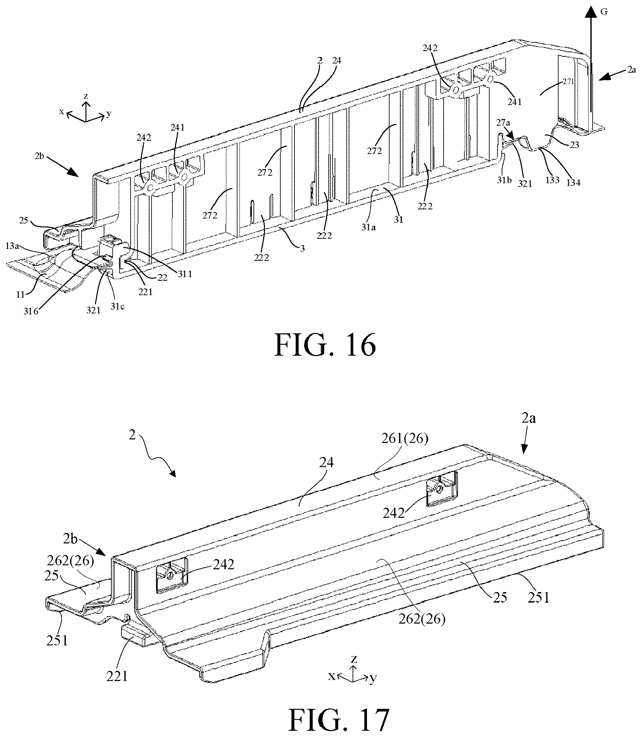

Then, the bracket 2 shown in FIG. 3 is mounted to the inner liner 11 in a manner of rotating downwards with the circle center O as a circle center. Specifically, the protrusion portion 221 is put into the accommodating cavity 31 as shown in FIG. 14 and pushed along the accommodating cavity 31 toward the rear wall 31c of the accommodating cavity 31 until the protrusion portion 221 hooks the first adapting portion 311 as shown in FIG. 15. Then, the bracket 2 is rotated downwards with the circle center O of the second arc segment 314 as a rotation fulcrum, i.e., overturned and locked in an acting force direction shown in FIG. 15 (denoted as a symbol G in the figure). As the bracket 2 rotates, a front end 2a of the bracket 2 sequentially extends into the accommodating cavity 31 along the straight line segment 312 and the first arc segment 313 until mounting in place is achieved, as shown in FIG. 16.

The bracket 2 has the front end 2a and the rear end 2b opposite to each other in the y direction, where the front end 2a of the bracket 2 is close to the opening of the refrigeration compartment 13 and the rear end 2b of the bracket 2 is close to the rear wall of the refrigeration compartment 13.

Thus, fixing between the bracket 2 and the bracket fixer 3 and positioning between the bracket 2 and the inner liner 11 are achieved through special design of the bracket 2 and the bracket fixer 3 on a matching surface in a manner of rotating downwards with an engaged position circle center (namely, the circle center O) as a circle center.

Further, a bottom shape of vertical reinforcing ribs of the bracket 2 may be adapted to a shape of the front wall 31b of the accommodating cavity 31 so as to ensure that the bracket 2 can be mounted in place by taking the rear end 2b as an axis to rotate downwards. The vertical reinforcing ribs are reinforcing ribs 27 extending in the y direction, such as first part of reinforcing ribs 271 described below.

Further, a side of the protrusion portion 221 facing the first adapting portion 311 is fitted to the curvature of the second arc segment 314 so that the bracket 2 can be smoothly rotated downwards with the circle center O as a circle center until mounting in place is achieved.

Upon disassembly, the front end 2a of the bracket 2 is pulled upwards in the acting force direction (denoted as the symbol G in the figure) shown in FIG. 16, and the bracket 2 is pulled forward in the y direction so that the protrusion portion 221 and the first adapting portion 311 are separated, thereby finally changing to a state where the bracket 2 and the inner liner 11 are separated as shown in FIG. 3 from the states shown in FIGS. 15 and 14.

In one changed example, the protrusion portion 221 may be located on a side surface of the longitudinal supporting portion 24 in the x direction. Accordingly, the circle center O may be located at the side wall 31d of the accommodating cavity 31, and the bracket 2 is rotated in a plane formed by the x direction and the z direction with the circle center O as a circle center so as to be mounted in the accommodating cavity 31.

Alternatively, the protrusion portion 221 may be located at the front end 2a of the bracket 2. Accordingly, the circle center O may be located at the front wall 31b of the accommodating cavity 31, and the bracket 2 is rotated in a plane formed by the y direction and the z direction with the circle center O as a circle center so as to be mounted in the accommodating cavity 31.

In one changed example, the protrusion portion 221 may extend outward from the longitudinal supporting portion 24 in the y direction and be bent upward at the tail end to form a hook. The hook located at the rear end 2b of the bracket 2 is adapted to upwarp and hook the first adapting portion 311 as the front end 2a of the bracket 2 overturns downward after the protrusion portion 221 extends into a lower portion of the first adapting portion 311 at an angle as shown in FIG. 14 to achieve a better coupling effect.

In one specific implementation, continuing to refer to FIGS. 3, 4, 6 to 11, and 14 to 16, the first fixed portion 22 may include a hook portion 222, the accommodating cavity 31 may be provided with a second adapting portion 315, and the hook portion 222 is suitable for being coupled to or decoupled from the second adapting portion 315. FIG. 8 is an exploded view of a cross-sectional structure as shown in FIG. 7, and FIG. 11 is a partially enlarged view of a region E in FIG. 10.

Specifically, the first fixed portion 22 may include a plurality of hook portions 222 disposed at intervals along an edge of the longitudinal supporting portion 24, and a plurality of second adapting portions 315 may be correspondingly disposed on the pair of side wall 31d of the accommodating cavity 31 at intervals.

For example, the hook portions 222 may be disposed on two opposite side surfaces of the longitudinal supporting portion 24 in the x direction, and correspondingly, the second adapting portion 315 is disposed on the side wall 31d of the accommodating cavity 31.

Further, the hook portions 222 located on both sides of the longitudinal supporting portion 24 in the x direction may be symmetrically disposed, and correspondingly, the second adapting portions 315 disposed on the pair of side walls 31d of the accommodating cavity 31 may also be symmetrically disposed.

Alternatively, the hook portions 222 located on both sides of the longitudinal supporting portion 24 in the x direction may be disposed in a staggered mode, and correspondingly, the second adapting portions 315 disposed on the pair of side walls 31d of the accommodating cavity 31 may be staggered from each other.

Thus, the hook portion 222 is coupled to the second adapting portion 315, which can further ensure reliable combination of the bracket and 2 the accommodating cavity 31. Further, the hook portion 222 may be decoupled from the second adapting portion 315 so that the bracket 2 can be disassembled from the interior of the accommodating cavity 31.

In a typical application scenario, as the bracket 2 is rotated to the bottom of the longitudinal supporting portion 24 to fully extend into the accommodating cavity 31 as shown in FIG. 16 from the states shown in FIGS. 14 and 15, the hook portion 222 disposed on the bracket 2 is coupled to the second adapting portion 315 correspondingly disposed in the accommodating cavity 31.

At this time, the bracket 2 is firmly connected to the bracket fixer 3, and the inner liner 11 is sandwiched between the bracket 2 and the bracket fixer 3. Since the accommodating cavity 31 passes through both sides of the mounting hole 132 in the z direction, and the longitudinal supporting portion 24 is located in the accommodating cavity 31, movement of the bracket 2 on the plane formed by the x direction and the y direction can be effectively restricted by the mounting hole 132, achieving positioning between the bracket 2 and the inner liner 11.

In one specific implementation, continuing to refer to FIGS. 3, 4 and 10, the first supporting portion 32 may include the skirt 321 extending outwards from the accommodating cavity 31, the side of the skirt 321 facing the bracket 2 may abut against the bottom wall 13a of the refrigeration compartment 13, and the side of the skirt 321 facing away from the bracket 2 may be combined with the thermal insulating layer 12.

Thus, the skirt 321 can ensure that the bracket fixer 3 is firmly fixed to the inner liner 11 and can also isolate the thermal insulating layer 12 to avoid bubble leakage.

Specifically, the skirt 321 may be connected to the side of the pair of side walls 31d, the front wall 31b and/or the rear wall 31c of the accommodating cavity 31 facing away from the accommodating cavity 31, and extend outward from a joint and extend in the direction of the bracket 2. For example, referring to FIG. 10, a root portion of the skirt 321 is connected to the side wall 31d of the accommodating cavity 31 and extends from the side wall 31d of the accommodating cavity 31 in the x direction and the z direction. Thus, an edge of the skirt 321 can be brought into line contact with the bottom wall 13a of the refrigeration compartment 13 when the bracket fixer 3 is mounted to the inner liner 11 before foaming to form a sealing line so as to achieve an effect of preventing bubble leakage during foaming.

Further, in the z direction, the joint of the skirt 321 and the accommodating cavity 31 may be approximately located in a middle of the side wall 31d of the accommodating cavity 31. That is, a distance from the root portion of the skirt 321 to the bottom wall 31a of the accommodating cavity 31 is basically equal to a distance from the root portion of the skirt 321 to a top end of the side wall 31d of the accommodating cavity 31. Thus, the height of the accommodating cavity 31 remaining outside the inner liner 11 and the height of the accommodating cavity 31 extending into the refrigeration compartment 13 are basically equal, so that it is avoided that the portion of the bracket 2 extending into the accommodating cavity 31 is so small, consequently affecting the reliability of combination of the bracket 2 and the accommodating cavity 31, and it is also avoided that the portion of the accommodating cavity 31 extending into the refrigeration compartment 13 is so large, causing damage by an external force in daily use.

Further, the skirt 321 may form a closed loop around the accommodating cavity 31 and the closed loop can form a closed sealing line around the mounting hole 132 to effectively avoid bubble leakage.

Further, the skirt 321 is in line contact with the bottom wall 13a of the refrigeration compartment13 at least when the thermal insulating layer 12 is not filled by filling a thermal insulating material. In view of the possible uneven wall thickness phenomenon in the forming process of the inner liner 11, the skirt 321 may be of a flexible construction and the skirt 321 is at least in line contact with the bottom wall 13a of the refrigeration compartment 13 when the bracket fixer 3 is assembled to the inner liner 11 before foaming. During foaming, whether the wall thickness of the inner liner 11 in a region covered by the skirt 321 is small or large, the design of the flexible structure can provide a sufficient pressure to make the skirt 321 and the inner liner 11 attached closely to form a sealing structure, avoiding bubble leakage during foaming.

Further, the skirt 321 may be compressed to be deformed by the thermal insulating layer 12. For example, before foaming, the skirt 321 is in line-to-surface contact with the bottom wall 13a of the refrigeration compartment 13 when the bracket fixer 3 is mounted to the mounting hole 132, and after foaming, the skirt 321 may be compressed to be deformed by the thermal insulating layer 12 to be in surface-to-surface contact with the bottom wall 13a of the refrigeration compartment 13. Thus, the skirt 321 can be closely attached with the inner liner 11, for example in surface-to-surface contact, which is advantageous to prevent leakage of foaming liquid from the mounting hole 132.

For example, the skirt 321 may be an arc surface curved towards the bracket 2 to further provide expansion space for the foaming liquid so that the skirt 321 can be compressed by the thermal insulating layer 12 to be closely attached to the inner liner 11.

Further, there may be a space between the root portion of the skirt 321 (i.e. the joint of the skirt 321 and the accommodating cavity 31) and the mounting hole 132, and the tail end of the skirt 321 (i.e. the edge of the skirt 321 described above) may abut against the bottom wall 13a of the refrigeration compartment 13. Thus, a gap between the skirt 321 and the bottom wall 13a of the refrigeration compartment 13 can provide a deformation space for the skirt 321 to be compressed to be deformed by the thermal insulating layer 12 during foaming. Further, the gap can also achieve sealing cushioning, even if a small amount of the foaming liquid enters the gap between the skirt 321 and the inner liner 11 during foaming, excess foaming liquid may accumulate in the gap without overflowing from the mounting hole 132 into the refrigeration compartment 13.

In one specific implementation, in combination with FIGS. 10 and 11, a gap may exist between the second supporting portion 33 and the mounting hole 132 on a plane perpendicular to the height direction of the refrigeration compartment 13, namely on the plane formed by the x direction and the y direction. FIG. 11 is a partially enlarged view of a region E in FIG. 10. Taking a structure as shown in FIG. 11 as an example, there is a not-zero gap in the x direction between the side wall 31b of the accommodating cavity 31 and the mounting hole 132.

In practical applications, the specific value of the gap between the second supporting portion 33 and the mounting hole 132 can be adjusted according to the tolerance level of punching of the inner liner 11, so as to avoid that punching of the inner liner 11 affects movement of the bracket fixer 3. In a scenario where tolerance control of the mounting hole 132 formed by punching the inner liner 11 is good, there may be no significant gap between the second supporting portion 33 and the mounting hole 132.

Thus, the dimension of a main body of the bracket fixer 3 except the skirt 321 is smaller than that of a punched hole (namely, the mounting hole 132) of the inner liner 11, so as to reduce the influence of a change of a wall thickness of the inner liner 11 on cooperation between the bracket 2 and the bracket fixer 3, and eliminate the negative influence of a punching error on mounting of the bracket 3.

In one specific implementation, referring to FIGS. 3, 4, 6 to 9 and 16, the bracket 2 may include a second fixed portion 23, and the second fixed portion 23 is matched with the bottom wall 13a of the refrigeration compartment 13 to limit the bracket 2.

Specifically, the second fixed portion 23 may be used for restricting movement of the bracket 2 relative to the refrigeration compartment 13 in at least one horizontal direction. Thus, positioning of the bracket 2 and the inner liner 11 in the front-rear direction (i.e. the y direction) and/or the left-right direction (i.e. the x direction) is ensured.

For example, a limiting structure 133 may be formed at the bottom wall 13a of the refrigeration compartment 13, and the second fixed portion 23 is matched with the limiting structure 133 to restrict movement of the bracket 2 relative to the refrigeration compartment 13 in the y direction.

Thus, the second fixed portion 23 is matched with the limiting structure 133 disposed at the bottom wall 13a of the refrigeration compartment 13 to precisely position the bracket 2 and the inner liner 11 in the front-rear direction (namely, the y direction), particularly before foaming.

Thus, the bracket 2 can be detachably fixed to the bracket fixer 3 conveniently and fast so as to facilitate replacement, and positioning of the bracket 2 in the refrigeration compartment 13 is more accurate, and the bracket fixer 3 is high in structural strength and can bear large loads. Specifically, the bracket fixer 3 is partially covered with the thermal insulating layer 12 so that the bracket fixer 3 and the bracket 2 fixed thereto can be firmly combined with the inner liner 11. The bracket fixer 3 and the inner liner 11 are bonded together by the thermal insulating layer 12, and the inner liner 11 can share the acting force applied to the bracket fixer 3 by the bracket 2 and the storage container 131 supported thereon, so that the supporting effect of the bracket fixer 3 provided in this implementation solution is better. Further, the mounting hole 132 may be formed in the inner liner 11 by punching to facilitate guaranteeing relative positions of the bracket 2 fixed to the portion (namely, the second supporting portion 33) of the bracket fixer 3 passing through the mounting hole 132 and the inner liner 11.

Further, the bracket 2 is detachably fixed to the bracket fixer 3, so that repeated disassembling and assembling of the bracket 2 is achieved.

Thus, accurate positioning of the bracket 2 and the inner liner 11 is guaranteed by the bracket 2 through cooperation of the second fixed portion 23 and the bottom wall 13a of the refrigeration compartment 13, then ensuring accurate relative positions of the storage container 131 supported on the bracket 2 and the inner liner 11.

In one specific implementation, continuing to refer to FIGS. 3, 4, 6 to 9, and 16, the bottom wall 13a of the refrigeration compartment 13 may have a positioning groove 134 recessed towards the thermal insulating layer 12, the positioning groove 134 being suitable for forming the limiting structure 133. The second fixed portion 23 extends into the positioning groove 134 to achieve positioning between the bracket 2 and the inner liner 11.

Specifically, the second fixed portion 23 may include positioning ribs, and front-rear positioning of the bracket 2 and the inner liner 11 can be achieved by cooperation with the positioning groove 134. For example, in the y direction, both ends of the positioning rib abut against both ends of the positioning groove 134, respectively.

Further, in the y direction, the second fixed portion 23 is located at the front end 2a of the bracket 2 and the positioning groove 134 is located in front of the mounting hole 132. By disposing the positioning groove 134 at a shallow position of the refrigeration compartment 13, namely, a position closer to the opening of the refrigeration compartment 13, assembling is more facilitated, and it is easy to confirm positions of the second fixed portion 23 and the positioning groove 134 during mounting, so that the second fixed portion 23 can be quickly inserted into the positioning groove 134 during mounting.

Further, the second fixed portion 23 may be a cross rib, and the positioning groove 134 may be a rectangular blind hole. In addition to restricting movement of the bracket 2 in the front-rear direction, the cross-shaped positioning rib can also play a restricting role to a certain extent in the left-right direction (namely, the x direction). For example, both ends of the cross rib in the x direction abut against both sides of the positioning groove 134 in the x direction, respectively, thereby limiting the bracket 2 in the left-right direction.

In one changed example, the second fixed portion 23 may include a groove recessed in a direction away from the inner liner 11, and the limiting structure 133 may include a protruding rib extending upward from the bottom wall 13a of the refrigeration compartment 13. During assembly, as the front end 2a of the bracket 2 is overturned downwards with the circle center O as a circle center, the groove covers the protruding rib to achieve front-rear and/or left-right positioning between the bracket 2 and the inner liner 11.

In one changed example, the second fixed portion 23 may be a rib in a ^{∗} shape, a circular shape, a polygonal shape, or the like.

In one changed example, the shape of the positioning groove 134 may fit the shape of the positioning rib for further accurate positioning. For example, the positioning groove 134 may include a groove in a circular shape, a triangular shape, a quadrilateral shape, a polygonal shape, or the like. The cross rib as the second fixed portion 23 is inserted into the cross-shaped groove to achieve positioning between the bracket 2 and the inner liner 11 in the x direction and the y direction.

In one changed example, the limiting structure 133 may include a boss protruding upwards from the bottom wall 13a of the refrigeration compartment 13, and the second fixed portion 23 may include a boss protruding downwards, the two bosses being disposed front and back in the y direction. In cooperation with the first fixed portion 22, such a design also enables positioning of the bracket 2 and the inner liner 11 in the y direction.

In one specific implementation, continuing to refer to FIG. 4, the bottom of the positioning groove 134 may be substantially flush with the bottom of the first supporting portion 32 in the z direction. That is, the bottom wall 13a of the refrigeration compartment 13 is recessed downwards to form the lowest point of the positioning groove 134, and may be flush with the bottom wall 31a of the accommodating cavity 31.

Thus, bottoms of the portion of the bracket 2 extending into the accommodating cavity 31 and the portion located outside the accommodating cavity 31 and extending into the positioning groove 134 are flush, so that a bottom surface of the bracket 2 is flat and force borne when supporting the storage container 131 can be evenly distributed to the bracket fixer 3 and the inner liner 11.

Further, the bracket 2 having a flat bottom surface can be placed stably when placed alone, facilitating storage of components.

In one specific implementation, continuing to refer to FIGS. 3 to 5, 7 to 10, and 14 to 16, the bottom wall 13a of the refrigeration compartment 13 has a boss 135 protruding towards the bracket 2, the mounting hole 132 being formed in the boss 135, and the bracket 2 being supported on the boss 135 and at least covering both sides of the boss 135 at least in the x direction. Thus, left-right positioning, namely positioning in the x direction, of the bracket 2 and the inner liner 11 can be achieved.

Specifically, the boss 135 may be a positioning surface formed by punching the inner liner 11 and a circle of protrusions around the inner liner 11, and the bracket 2 covers the positioning surface on the left and right at least in the x direction so as to achieve left-right positioning. That is, in addition to covering the boss 135, side wings of the bracket 2 in the x direction (such as the extended supporting portion 25 described below) further extend in a direction away from the longitudinal supporting portion 24 to abut against the portion of the bottom wall 13a of the refrigeration compartment 13 other than the boss 135. Since the boss 135 is higher than the other portion of the bottom wall 13a of the refrigeration compartment 13, left-right movement of the bracket 2 in the x direction can be effectively restricted by the boss 135.

Further, the bracket 2 may have a supporting surface 26 extending in fit with the shape of the boss 135, the supporting surface 26 being suitable for forming the second fixed portion 23. Thus, the second fixed portion 23 formed by the supporting surface 26 and the positioning surface formed by the boss 135 are in zero-clearance fit to realize left-right positioning of the bracket 2 and the inner liner 11.

Further, the positioning groove 134 may be formed on the boss 135 and disposed side by side with the mounting hole 132 in the y direction, and the positioning groove 134 is suitable for being matched with the second fixed portion 23 formed by the positioning rib to restrict movement of the bracket 2 in the front-rear direction (i.e. the y direction). For example, the positioning groove 134 may be located in front of the mounting hole 132 and is collinear with the mounting hole 132.

Thus, the positioning groove 134 and the second fixed portion 23 formed by the positioning rib are matched to realize front-rear positioning of the bracket 2 and the inner liner 11, and the boss 135 and the second fixed portion 23 formed by the supporting surface 26 are matched to realize left-right positioning of the bracket 2 and the inner liner 11.

In one specific implementation, continuing to refer to FIGS. 2, 4, and 7, the front end 2a of the bracket 2 may cover the front end of the boss 135 in the y direction. Specifically, the front end 2a of the bracket 2 may extend forwards in the y direction to go beyond the boss 135 and abut against the portion of the bottom wall 13a of the refrigeration compartment 13 located in front of the boss 135.

Thus, both the bracket fixer 3 and the boss 135 are shielded by the bracket 2 when viewed from the front side of the refrigeration compartment 13, so that the bracket mounting region substantially exposes only one complete surface from the front side of the refrigeration compartment 13 (as shown in FIG. 1), improving the attractiveness of the front side of the refrigeration compartment 13. Further, the design of covering the front end of the boss 135 enables movement of the bracket 2 in the y direction relative to the inner liner 11 to be displayed to a certain extent by the boss 135, thereby further achieving front-rear positioning of the bracket 2 and the inner liner 11.

In one specific implementation, the rear end 2b of the bracket 2 may be of an open structure, so that the protrusion portion 221 of the bracket 2 can extend into the accommodating cavity 31 without being shielded and move towards the first adapting portion 311 during mounting until assembling in place is achieved.

In one changed example, the rear end 2b of the bracket 2 can also cover the rear end of the boss 135 in the y direction, so as to further position the bracket 2 and the inner liner 11 in the front-rear direction. During assembling, the rear end 2b of the bracket 2 covers the rear end of the boss 135, and at the same time, the protrusion portion 221 extends into the lower portion of the first adapting portion 311 and rotates downwards with the circle center O of the second arc segment 314 as a circle center until assembling in place is achieved.

In one specific implementation, continuing to refer to FIGS. 2, 3, 6-8, and 10, the bracket 2 may include a longitudinal supporting portion 24 and two extended supporting portions 25 extending outward from both sides of the longitudinal supporting portion 24.

Specifically, the longitudinal supporting portion 24 may extend upwards in the z direction from a position between the two extended supporting portions 25 so as to form the side surface of the bracket 2 on the plane formed by the z direction and the y direction. Accordingly, the guide rails 21 are respectively connected to both sides of the longitudinal supporting portion 24 in the x direction to support two storage containers 131 located on both sides of the longitudinal supporting portion 24.

The two extended supporting portions 25 may be respectively located on both side surfaces of the bracket 2 as fixing seats to support and fix the longitudinal supporting portion 24 with one on the left and the other one on the right. The extended supporting portion 25 is adapted to increase a contact area of the bracket 2 with the bottom wall 13a of the refrigeration compartment 13 so that the bracket 2 is more stably supported in the refrigeration compartment 13.

Further, an edge 251 of the extended supporting portion 25 may abut against the portion of the bottom wall 13a of the refrigeration compartment 13 surrounding the boss 135. Thus, positioning of the bracket 2 and the inner liner 11 in the left-right direction and/or the front-rear direction is achieved by covering the whole boss 135 with the extended supporting portion 25.

In one specific implementation, continuing to refer to FIGS. 4, 6 to 8 and 10, the side of the bracket 2 facing the boss 135 may be provided with a plurality of reinforcing ribs 27 to increase the overall structural strength of the bracket 2. Further, the shape of the tail end 27a of the reinforcing rib 27 fits the shape of the boss 135.

Divided in a direction of extension, the plurality of reinforcing ribs 27 may include a first part of reinforcing ribs 271 extending in the y direction and a second part of reinforcing ribs 272 extending in the x direction.

The first part of reinforcing ribs 271 may be disposed at intervals in the x direction.

The first part of reinforcing ribs 271 may be located in front of the mounting hole 132, i.e. extend downwards from the bracket 2 until the tail end 27a abuts against the portion of the boss 135 located in front of the mounting hole 132.

The first part of reinforcing ribs 271 may further extend in the y direction so that a part of the tail end 27a abuts against the portion of the bottom wall 13a of the refrigeration compartment 13 located in front of the boss 135. That is, the first part of reinforcing ribs 271 span the boss 135 in the y direction and abut against the portion of the bottom wall 13a of the refrigeration compartment 13 surrounding the exterior of the boss 135. Thus, the first part of reinforcing ribs 271 can play a supporting and front-rear positioning role and can also disperse force to improve structural strength. Specifically, the shape of the tail end 27a of the first part of reinforcing rib 271 fits the shape of the front end of the boss 135 and the shape of the bottom wall 13a of the refrigeration compartment 13 connected to the front end of the boss 135, respectively, so as to better realize front-rear positioning of the bracket 2 and the inner liner 11.

The first part of the reinforcing rib 271 located in front of the mounting hole 132 may further extend downwards to abut against the bottom of the positioning groove 134 at a position corresponding to the positioning groove 134 to form the second fixed portion 23.

The spacing between adjacent first part of reinforcing ribs 271 located in front of the mounting holes132 may be equal to the spacing between two opposite side surfaces of the longitudinal supporting portion 24 in the x direction.

The first part of reinforcing ribs 271 may also be located on both sides of the protrusion portion 221 in the x direction to assist in increasing the structural strength of the rear end 2b of the bracket 2.

The cross rib forming the second fixed portion 23 may reuse the first part of reinforcing rib 271.

The second part of reinforcing ribs 272 may be disposed at intervals in the y direction to be distributed over the boss 135. And, the second part of reinforcing ribs 272 may further extend in the x direction so that a part of the tail end 27a abuts against the portion of the bottom wall 13a of the refrigeration compartment 13 located on left and right sides of the boss 135. That is, the second part of reinforcing ribs 272 span the boss 135 in the x direction and abuts against the portion of the bottom wall 13a of the refrigeration compartment 13 surrounding the exterior of the boss 135. Thus, the second part of reinforcing ribs 272 can play a supporting and left-right positioning role and can also disperse force to improve structural strength. Specifically, the shape of the tail end 27a of the second part of reinforcing rib 272 fits the shape of the entire boss surface of the boss 135 and the bottom wall 13a of the refrigeration compartment 13 connected to the left and right sides of the boss 135, respectively, so as to better realize left-right positioning of the bracket 2 and the inner liner 11 easily.

Thus, the boss 135 and the reinforcing rib 27 on the bracket 2 are positioned with zero-clearance fit, and since both formation of the boss 135 and the reinforcing rib 27 on the bracket 2 is guaranteed with a mold so that positioning of the bracket 2 and the inner liner 11 is more accurate. Furthermore, the mold can be modified as required to adjust the matching effect between the reinforcing rib 27 and the boss 135, and since mold modification is highly adjustable and easy to operate, accurate positioning of the bracket 2 and the inner liner 11 can be achieved more quickly and accurately.

Further, before foaming, movement of the bracket 2 relative to the inner liner 11 can be effectively restricted by direct contact between the shape of the inner liner 11 and the reinforcing rib 27 of the bracket 2.

In one changed example, the side of the extended supporting portion 25 facing the boss 135 may be in surface-to-surface contact or line-to-surface contact with the boss 135. For example, the extended supporting portion 25 may form a second supporting surface 262, the shape of the second supporting surface 262 fits the shape of the boss 135, and the second supporting surface 262 is in surface-to-surface contact with the boss 135.

Thus, the extended supporting portions 25 serve as side wings of the bracket 2 to be supported on both sides of the longitudinal supporting portion 24, and the side wing is not provided with a reinforcing rib, but the whole surface of the side wing is attached to the boss of the inner liner 11, which can also realize left-right positioning of the bracket 2 and the inner liner 11.

In one specific implementation, the longitudinal supporting portion 24 and the two extended supporting portions 25 may be an integrated piece.

That is, the two extended supporting portions 25 and the longitudinal supporting portion 24 form an integrated structure.

Further, the extended supporting portion 25 and the storage container 131 located on the same side surface of the bracket 2 at least partially overlap in the z direction. Thus, it is possible to use of the space of the refrigeration compartment 13 to the maximum extent, so that a width of the storage container 131 in the x direction can be made as large as possible to increase the volume of the storage container 131.

Thus, the design of the integrated piece can effectively solve the problem that due to an assembly error of the bracket 2, the guide rails 21 connected to both sides of the longitudinal supporting portion 24 cannot be aligned, and greatly reduce a height difference between two storage containers 131 connected to the guide rails 21 on both sides respectively. Further, the design of the integrated piece also facilitates a reduction in member number.

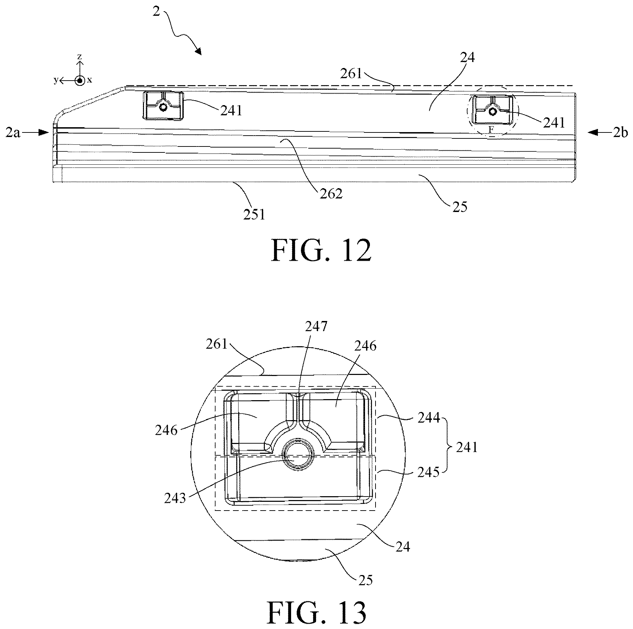

In one specific implementation, referring to FIG. 12, the longitudinal supporting portion 24 may have a first supporting surface 261, the extended supporting portion 25 may have a second supporting surface 262, and the first supporting surface 261 and the second supporting surface 262 may be collectively referred to as a supporting surface 26. FIG. 12 is a side view of a bracket in FIG. 3.

Specifically, the first supporting surface 261 may be a top surface of the longitudinal supporting portion 24 in the z direction, and similarly, the second supporting surface 262 may be a top surface of the extended supporting portions 25 in the z direction.

Further, in the y direction, the first supporting surface 261 and/or the second supporting surface 262 may extend rearward (i.e. a direction opposite to the y direction) and downwards (i.e. a direction opposite to the z direction). For example, the plane formed by the y direction and the x direction is shown in dashed lines in FIG. 12, and the first supporting surface 261 and the second supporting surface 262 each have a not-zero angle with the plane.

Thus, each of three main supporting surfaces of the bracket 2 can be designed to be high in front and low in rear, the main supporting surface being used for being matched with a foaming mold during foaming so as to restrict the expansion amplitude of a foamed layer (namely, the thermal insulating layer 12) in the z direction. When the main supporting surface of the bracket 2 is designed to be high in front and low in rear, it is more convenient for a slider of the foaming mold to support the main supporting surface of the bracket 2 during the foaming process of a box body.

In one specific implementation, continuing to refer to FIG. 4, the guide rails 21 may include a first guide rail 211 (as shown in FIG. 18) suitable for supporting one of the two storage containers 131 and a second guide rail 212 (as shown in FIG. 18) suitable for supporting the other one of the two storage containers 131. Further, the longitudinal supporting portion 24 may include a first mounting portion 241 for mounting the first guide rail 211 and a second mounting portion 242 for mounting the second guide rail 212. And, the first mounting portion 241 and the second mounting portion 242 are not collinear in the x direction.

Thus, the two storage containers 131 connected to the bracket 2 are less prone to a height difference, which is advantageous for improving the attractiveness of the storage container 131 placed in the refrigeration compartment 13. Further, the staggered design of the mounting portions for mounting the guide rails 21 on both sides of the bracket 2 can greatly reduce the width of the bracket 2 in the x direction compared with an existing implementation solution in which mounting portions of two drawers on the left and right must be disposed side by side in the x direction. Thereby it is advantageous to increase the available volume for storage in the refrigeration compartment 13, e.g. the volume of the two storage containers 131 disposed side by side in the refrigeration compartment 13 may be increased.

Specifically, the width of the longitudinal supporting portion 24 in the x direction may be a greater one of the lengths of the first mounting portion 241 and the second mounting portion 242 respectively in the x direction. When the lengths of the first mounting portion 241 and the second mounting portion 242 in the x direction are equal, a width W of the longitudinal supporting portion 24 need only be greater than the length of a single mounting portion. For example, the width of the longitudinal supporting portion 24 in the x direction may be less than or equal to 30 millimeters. Since the first mounting portion 241 and the second mounting portion 242 no longer need to be maintained at the same positions on the left and right sides of the longitudinal supporting portion 24, the width W of the longitudinal supporting portion 24 in the x direction is reduced from a sum of the lengths of the first mounting portion 241 and the second mounting portion 242 to a greater one of the lengths of the two mounting portions. Thus, the thickness (i.e. the width in the x direction) of the longitudinal supporting portion 24 is greatly reduced.

Further, the first mounting portion 241 and the second mounting portion 242 may be substantially flush in the z direction. That is, the direction in which the first mounting portion 241 points to the second mounting portion 242 may be parallel to the y direction. By disposing the two mounting portions at an interval in the y direction, the two mounting portions can be maintained at the same height in the z direction.

Thus, the first mounting portion 241 and the second mounting portion 242 are maintained at the same height in the z direction, so that the two storage containers 131 within the refrigeration compartment 13 are maintained flush in supporting height. Further, both the first mounting portion 241 and the second mounting portion 242 are disposed on the same member, namely, the bracket 2, and are formed on the same mold during manufacturing so that positional deviation between the first mounting portion 241 and the second mounting portion 242 can be minimized without introducing an assembly error, so that alignment accuracy between the two storage containers 131 supported on both sides of the bracket 2 can be ensured easily.

Furthermore, the bracket 2 is no longer formed by splicing two members on the left and right, and in particular, the longitudinal supporting portion 24 is an integrated piece, so that the main appearance surface of the bracket 2 is more attractive without a structural seam, eliminating a seam visible to a user in the middle of an existing bracket structure.

In one specific implementation, in combination with FIGS. 4, 12 and 13, for any mounting portion of the first mounting portion 241 and the second mounting portion 242, the mounting portion may include a screw hole 243, a first section 244 located between the screw hole 243 and a top end of the bracket 2, and a second section 245 located between the screw hole 243 and a bottom end of the bracket 2. FIG. 13 is a partially enlarged view of a region F in FIG. 12. The top end of the bracket 2 refers to the end of the bracket 2 facing upwards in the z direction, and the bottom end of the bracket 2 refers to the end of the bracket 2 facing downwards in the z direction and abutting against the accommodating cavity 31. The first supporting surface 261 is formed at the top end of the bracket 2.

Specifically, the first section 244 and the second section 245 are formed by using different core-pulling mechanisms. For example, the first section 244 may be formed by a side core-pulling mechanism and the second section 245 may be formed by a downward core-pulling mechanism.

Thus, it is possible to form the mounting portion on the integrated bracket 2 by separately forming a part of the mounting portion by different core-pulling mechanisms. Further, the first mounting portion 241 and the second mounting portion 242 are concentrated onto one member and injection-molded at a time, and relative positions of the first mounting portion 241 and the second mounting portion 242 are secured by an injection mold so that alignment with higher accuracy is achieved to eliminate the height difference of the guide rails 21 on both sides as much as possible.

In one specific implementation, the first section 244 may include two blind holes 246 disposed at an interval in the y direction, and the two blind holes 246 may be holes formed by side core pulling.

Further, edges of sides of the two blind holes 246 close to the screw hole 243 are both same-radius arcs taking the screw hole 243 as a circle center. Thus, the screw hole 243 in the mounting portion obtained by mold drawing has a uniform wall thickness in one circle. Further, the blind hole 246 is designed so that the top end of the bracket 2 does not collapse while the mounting portion is formed by mold drawing.

Further, the two blind holes 246 are separated by a vertical rib 247, and the vertical rib 247 passes through the circle center of the screw hole 243.

Further, a boundary of the first section 244 and the second section 245 may also pass through the circle center of the screw hole 243. Thus, the screw hole 243 is located at the center of the mounting portion (such as the first mounting portion 241 or the second mounting portion 242), so that the force of the guide rail 21 and the storage container 131 supported on the guide rail 21 borne by the screw hole 243 can be uniformly dispersed onto the mounting portion, improving the structural strength of the member.

FIG. 17 is a schematic view of another bracket according to an embodiment of the present invention, and FIG. 18 is a schematic view of combination of a bracket and guide rails as shown in FIG. 16. A difference from the bracket 2 as shown above in FIG. 2 is that the width of the two extended supporting portions 25 of the bracket 2 as shown in FIGS. 17 and 18 in the x direction varies in the y direction.

For example, the width of the extended supporting portion 25 at a position close to the rear end 2b of the bracket 2 in the x direction is greater than the width of the extended supporting portion 25 at a position close to the front end 2a of the bracket 2 in the x direction.

Thus, a more stable support can be provided at the rear end 2b of the bracket 2.

In one specific implementation, referring to FIG. 18, the first mounting portion 241 may be shielded by the first guide rail 211 and the second mounting portion 242 may be shielded by the second guide rail 212. Thus, by adapting to the guide rail 21, the hole (namely, the blind hole 246) formed by core pulling in the mounting portion is shielded by the guide rail 21 so as to be invisible to the outside, which is more attractive.

From the above, with this embodiment, the bracket 2 and the bracket fixer 3, and the bracket 2 and the inner liner 11 all have matching structures for positioning and fixing. For example, the first fixed portion 22 at the rear end 2b of the bracket 2 is detachably fixed to the bracket fixer 3, and the second fixed portion 23 at the front end 2a of the bracket 2 extends into the positioning groove 134 of the bottom wall 13a of the refrigeration compartment 13 to be positioned in the front-rear direction.

In one specific implementation, referring to FIG. 19, a method for manufacturing the refrigeration appliance 1 as described above in FIGS. 1-18 may include:
S101, enabling the bracket fixer 3 to pass through the mounting hole 132 from a portion outside the bottom wall 13a of the refrigeration compartment 13 to be located in the refrigeration compartment 13;
S102, fixing the bracket 2 to the bracket fixer 3, where, the first fixed portion 22 is coupled to the bracket fixer 3, and the second fixed portion 23 is matched with the bottom wall 13a of the refrigeration compartment 13;
S103, filling a thermal insulating material between the inner liner 11 and the housing 10 to form the thermal insulating layer 12, the thermal insulating layer 12 being suitable to be combined with the portion of the bracket fixer 3 located outside the bottom wall 13a of the refrigeration compartment 13 to fix the bracket fixer 3.

Further, step S101 may include the steps of: enabling the bracket fixer 3 to pass through the mounting hole 132 from bottom to top in the z direction from the portion outside the bottom wall 13a of the refrigeration compartment 13 until the skirt 321 of the bracket fixer 3 abuts against the bottom wall 13a of the refrigeration compartment 13 from below. At this time, the second supporting portion 33 is located inside the refrigeration compartment 13, and the first supporting portion 32 is located outside the bottom wall 13a of the refrigeration compartment 13. Further, step S102 can include the following steps:
first, the protrusion portion 221 is put into the accommodating cavity 31 and pushed along the accommodating cavity 31 towards the rear wall 31c of the accommodating cavity 31 until the protrusion portion 221 reaches the first adapting portion 311.

Then, after the protrusion portion 221 is pushed in, as shown in FIG. 15, to hook the first adapting portion 311, the front end 2a of the bracket 2 is rotated downward with the circle center O of the second arc segment 314 as the rotation fulcrum, i.e., overturned and locked in the acting force direction shown in FIG. 15 (denoted as a symbol G in the figure).

As the bracket 2 rotates, the front end 2a of the bracket 2 sequentially extends into the accommodating cavity 31 along the straight line segment 312 and the first arc segment 313 until the tail end 27a of the reinforcing rib 27 abuts against the boss 135. At the same time, the hook portion 222 is coupled into the corresponding second adapting portion 315.

As the bracket 2 and the bracket fixer 3 are locked, and the inner liner 11 is fixed between the bracket 2 and the bracket fixer 3. At the same time, the second fixed portion 23 is inserted into the positioning groove 134 to achieve positioning between the inner liner 11 and the bracket 2. During the locking process, the shape of the tail end 27a of the reinforcing rib 27 matches the shape of the boss 135 for positioning, so as to ensure accurate relative positions of the bracket 2 as well as the bracket fixer 3 and the inner liner11 after locking.

Thus, the bottom wall 13a of the refrigeration compartment 13 is sandwiched between the bracket 2 and the skirt 321 to reliably fix the bracket fixer 3 and the bracket 2 connected thereon to the inner liner 11 before foaming.

Thus, with this implementation solution, precise positioning between the bracket 2 and the inner liner 11 can be achieved both before and after foaming. Before foaming, the bracket 2 and the inner liner 11 are accurately positioned by the first fixed portion 22 and the second fixed portion 23, and the bracket fixer 3 is fixed to the inner liner 11. After foaming, the bracket fixer 3 plays a supporting, force bearing and positioning role.

Further, during assembling in the above solution, the contact portion of the first fixed portion 22 and the first adapting portion 311 may define the rotation fulcrum (such as the circle center O), and therefore the bracket 2 is automatically positioned for mounting so that the bracket 2 can be naturally mounted in place by rotating around the rotation fulcrum in the direction close to the mounting hole 132, which greatly improves the convenience for assembling the bracket 2. Therefore, in the process of mounting the bracket 2 in the refrigeration compartment 13, the troublesome precise alignment work can be omitted, but the bracket 2 can still be accurately mounted in place.

On the other hand, in this solution, the bracket 2 rotates around the rotation fulcrum in the direction close to the mounting hole 132 to be fixed to the bracket fixer 3, which adopts the lever principle, thereby making mounting of the bracket 2 save more labor.

Although specific implementations have been described above, these implementations are not intended to limit the scope of the present invention, even if only one implementation is described with respect to specific features. The feature example provided in the present invention is intended to be illustrative rather than limiting, unless otherwise stated. In specific implementations, the technical features of one or more dependent claims may be combined with the technical features of the independent claims, and the technical features from the corresponding independent claims may be combined in any appropriate manner, rather than only in the specific combinations listed in the claims.

Although the present invention is disclosed above, the present invention is not limited thereto. Any person skilled in the art can make various changes and modifications without departing from the spirit and the scope of the present invention. Therefore, the protection scope of the present invention should be subject to the scope defined by the claims.

## Claims

1. A refrigeration appliance (1), comprising a housing (10), an inner liner (11) located inside the housing (10) and a thermal insulating layer (12) located between the housing (10) and the inner liner (11), at least one refrigeration compartment (13) being formed in the inner liner (11), and at least one storage container (131) being disposed in the refrigeration compartment (13);
**characterized by** further comprising:
a bracket (2) disposed in the refrigeration compartment (13), guide rails (21) being mounted on the bracket (2), and the storage container (131) being connected to the guide rail (21) and able to be pulled out of or pushed back into the refrigeration compartment (13) along the guide rail (21); and
a bracket fixer (3), combined with the thermal insulating layer (12), and part of the bracket fixer (3) passing through a mounting hole (132) formed in a bottom wall (13a) of the refrigeration compartment (13) to be located in the refrigeration compartment (13);
wherein, the bracket (2) comprises a first fixed portion (22) and a second fixed portion (23), the first fixed portion (22) being detachably fixed to the bracket fixer (3), and the second fixed portion (23) being matched with the bottom wall (13a) of the refrigeration compartment (13) to limit the bracket (2).

2. The refrigeration appliance (1) according to claim 1, **characterized in that** the second fixed portion (23) is used for restricting movement of the bracket (2) relative to the refrigeration compartment (13) in at least one horizontal direction, and/or, **characterized in that** a limiting structure (133) is formed at the bottom wall (13a) of the refrigeration compartment (13), and the second fixed portion (23) and the limiting structure (133) are matched to restrict movement of the bracket (2) relative to the refrigeration compartment (13) in a depth direction of the refrigeration compartment (13).

3. The refrigeration appliance (1) according to claim 1 or 2, **characterized in that** the bottom wall (13a) of the refrigeration compartment (13) has a positioning groove (134) recessed towards the thermal insulating layer (12), and the second fixed portion (23) extends into the positioning groove (134).

4. The refrigeration appliance (1) according to claim 3, **characterized in that** in the depth direction of the refrigeration compartment (13), the second fixed portion (23) is located at a front end (2a) of the bracket (2), and the positioning groove (134) is located in front of the mounting hole (132), and/or **characterized in that** the second fixed portion (23) is a cross rib, and the positioning groove (134) is a rectangular blind hole.

5. The refrigeration appliance (1) according to one or more of claims 1 to 4, **characterized in that** the bracket fixer (3) has an accommodating cavity (31) recessed towards the thermal insulating layer (12), and a part of the bracket (2) extends into the accommodating cavity (31) to be detachably fixed to the accommodating cavity (31).

6. The refrigeration appliance (1) according to claim 5, **characterized in that** the bracket fixer (3) comprises a first supporting portion (32) combined with the thermal insulating layer (12), and a second supporting portion (33) passing through the mounting hole (132) to be located in the refrigeration compartment (13), the accommodating cavity (31) is defined by a bottom wall (31a), the front wall (31b), the rear wall (31c) and a pair of side walls (31d), the bottom wall (31a) and a part of the side walls (31d), the front wall (31b) and the rear wall (31c) of the accommodating cavity (31) form the first supporting portion (32), and a remaining part of the side walls (31d), the front wall (31b) and the rear wall (31c) of the accommodating cavity (31) form the second supporting portion (33) or additionally **characterized in that** the first supporting portion (32) comprises a skirt (321) extending outwards from the accommodating cavity (31), the side of the skirt (321) facing the bracket (2) abutting against the bottom wall (13 a) of the refrigeration compartment (13), and the side of the skirt (321) facing away from the bracket (2) being combined with the thermal insulating layer (12).

7. The refrigeration appliance (1) according to one or more of claims 5 to 6, **characterized in that** the bracket (2) comprises a longitudinal supporting portion (24), the first fixed portion (22) comprises a protrusion portion (221) protruding outwards from the longitudinal supporting portion (24), and the accommodating cavity (31) is provided with a first adapting portion (311), wherein, the protrusion portion (221) is located below the first adapting portion (311) in a height direction of the refrigeration compartment (13), or additionally
- **characterized in that** in the depth direction of the refrigeration compartment (13), the protrusion portion (221) is located at a rear end (2b) of the bracket (2) and the first adapting portion (311) is located at a rear wall (31c) of the accommodating cavity (31), and/or
- **characterized in that** in the height direction of the refrigeration compartment (13), a front wall (31b) of the accommodating cavity (31) comprises, from top to bottom, a straight line segment (312) and a first arc segment (313) connected to each other, and the first adapting portion (311) comprises a second arc segment (314) protruding towards the front wall (31b) of the accommodating cavity (31), wherein, the circle center of the first arc segment (313) and the circle center of the second arc segment (314) coincide.

8. The refrigeration appliance (1) according to one or more of claims 5 to 7, **characterized in that** the first fixed portion (22) comprises a hook portion (222), the accommodating cavity (31) is provided with a second adapting portion (315), and the hook portion (222) is suitable for being coupled to or decoupled from the second adapting portion (315).

9. The refrigeration appliance (1) according to one or more of claims 1 to 8, **characterized in that** the bottom wall (13a) of the refrigeration compartment (13) has a boss (135) protruding towards the bracket (2), the mounting hole (132) being formed in the boss (135), and the bracket (2) being supported on the boss (135) and at least covering two sides of the boss (135) in a width direction of the refrigeration compartment (13).

10. The refrigeration appliance (1) according to claim 9, **characterized in that** the bracket (2) has a supporting surface (26) extending in fit with the shape of the boss (135), the supporting surface (26) being suitable for forming the second fixed portion (23); and/or **characterized in that** the boss (135) is provided with a positioning groove (134) for being matched with the second fixed portion (23), the positioning groove (134) and the mounting hole (132) being disposed side by side in a depth direction of the refrigeration compartment (13).

11. The refrigeration appliance (1) according to claim 10, **characterized in that** the bracket (2) comprises a longitudinal supporting portion (24) and two extended supporting portions (25) respectively extending outwards from two sides of the longitudinal supporting portion (24), the side of the extended supporting portion (25) facing the boss (135) being in surface-to-surface contact or line-to-surface contact with the boss (135); or addtionally **characterized in that** an edge (251) of the extended supporting portion (25) abuts against the portion of the bottom wall (13a) of the refrigeration compartment (13) surrounding the boss (135).

12. The refrigeration appliance (1) according to one or more of claims 9 to 11, **characterized in that** a plurality of reinforcing ribs (27) are disposed on the side of the bracket (2) facing the boss (135), and the shape of a tail end (27a) of the reinforcing rib (27) fits the shape of the boss (135).

13. The refrigeration appliance (1) according to claim 12, **characterized in that** the plurality of ribs (27) comprises first-part reinforcing ribs (271) extending in a depth direction of the refrigeration compartment (13) and second-part reinforcing ribs (272) extending in the width direction of the refrigeration compartment (13), wherein, the first-part reinforcing ribs (271) are located in front of the mounting hole (132) and the second-part reinforcing ribs (272) are distributed over the boss (135).

14. The refrigeration appliance (1) according to one or more of claims 1 to 13, **characterized in that** the bracket (2) comprises a longitudinal supporting portion (24) and two extended supporting portions (25) respectively extending outwards from two sides of the longitudinal supporting portion (24), the longitudinal supporting portion (24) having a first supporting surface (261), the extended supporting portion (25) having a second supporting surface (262), and the first supporting surface (261) and/or the second supporting surface (262) extending rearward and downwards in a depth direction of the refrigeration compartment (13).

15. A method for manufacturing the refrigeration appliance (1) according to any one of claims 1 to 14, **characterized by** comprising:
enabling the bracket fixer (3) to pass through the mounting hole (132) from a portion outside the bottom wall (13a) of the refrigeration compartment (13) to be located in the refrigeration compartment (13);
fixing the bracket (2) to the bracket fixer (3), wherein, the first fixed portion (22) is coupled to the bracket fixer (3), and the second fixed portion (23) is matched with the bottom wall (13a) of the refrigeration compartment (13);
filling a thermal insulating material between the inner liner (11) and the housing (10) to form the thermal insulating layer (12), the thermal insulating layer (12) being suitable to be combined with the portion of the bracket fixer (3) located outside the bottom wall (13a) of the refrigeration compartment (13) to fix the bracket fixer (3).
